(19)

**Europäisches Patentamt**
**European Patent Office**
**Office européen des brevets**

(11) **EP 1 853 081 B1**

(12) **EUROPEAN PATENT SPECIFICATION**

(45) Date of publication and mention
of the grant of the patent:
**16.09.2009 Bulletin 2009/38**

(51) Int Cl.:
*H04W 76/02* (2009.01)   *H04B 17/00* (2006.01)

(86) International application number:
**PCT/CN2006/000819**

(21) Application number: **06722410.5**

(22) Date of filing: **27.04.2006**

(87) International publication number:
**WO 2006/114058 (02.11.2006 Gazette 2006/44)**

(54) **METHOD AND APPARATUS OF INTER-FREQUENCY/SYSTEM MEASUREMENT DURING MBMS-RECEPTION**

VERFAHREN UND VORRICHTUNG ZUR ZWISCHEN-FREQUENZ-/SYSTEMMESSUNG BEI MBMS-EMPFANG

PROCÉDÉ ET DISPOSITIF DE MESURE DE SYSTÈME/INTERFRÉQUENCE PENDANT UNE RÉCEPTION D'UN SERVICE MBMS

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.04.2005 CN 200510068125**
**28.10.2005 CN 200510116765**

(43) Date of publication of application:
**07.11.2007 Bulletin 2007/45**

(73) Proprietor: **Huawei Technologies Co., Ltd.**
**Shenzhen 518129**
**Guangdong (CN)**

(72) Inventor: **Yin, Liyan**
**Huawei Administration Building**
**518129 Shenzhen Guangdong (CN)**

(74) Representative: **Körber, Martin Hans**
**Mitscherlich & Partner**
**Patent- und Rechtsanwälte**
**Sonnenstraße 33**
**80331 München (DE)**

(56) References cited:
**EP-A1- 1 478 198       WO-A1-20/05048529**
**CN-A- 1 572 073**

• **"Universal Mobile Telecommunications System (UMTS); Radio Resource Control (RRC) protocol specification (3GPP TS 25.331 version 6.4.0 Release 6); ETSI TS 125 331" ETSI STANDARDS, EUROPEAN TELECOMMUNICATIONS STANDARDS INSTITUTE, SOPHIA-ANTIPO, FR, vol. 3-R2, no. V640, December 2004 (2004-12), XP014027672 ISSN: 0000-0001**

EP 1 853 081 B1

**Description**

**Field of the Invention**

The present invention is related to the technology of inter frequency/system measurement for User Equipment (UE) in the 3rd Generation (3G) mobile communications system, and more particularly to an inter frequency/system measurement method for UE receiving broadcast/multicast information, and for identifying an inter frequency/system cell and reporting measuring results.

**Background of the invention**

The Universal Mobile Telecommunications System (UMTS) is a 3G mobile communications system with a WCDMA air interface technology adopted, and is mainly developed by the Third Generation Partnership Project (3GPP), i.e., a Wideband Code Division Multiple Access/Global System for Mobile Communications (WCDMA/GSM) global standardization organization.

In the 3GPP UMTS standard, according to whether a connection of Radio Resource Control (RRC) is established, user equipment (UE) may be in an idle mode and an RRC Connected mode. The UE having no RRC connection with the Universal Terrestrial Radio Access Network (UTRAN) of the UMTS is in the idle mode, in which different UE may be distinguished by a Non-Access Stratum (NAS) identity (ID), e.g. by an International Mobile subscriber identity (IMSI). The UE having the RRC connection with the UTRAN is in the RRC Connected mode, in which the UE is assigned a Radio network temporary identity (RNTI) as an ID on a common transport channel.

The UE in the RRC Connected mode may be in different states according to the hierarchy of the RRC connection and the type of the transport channel which the UE may use. The UE in a CELL_PCH state, CELL_FACH state or CELL_DCH state may be distinguished by a cell while the UE in the URA_PCH state may be distinguished by a UTRAN Register Area (URA). The UE in the CELL_DCH state is assigned a dedicated physical channel, and may use the dedicated transport channel, a shared channel and a combination thereof. The UE in the CELL_FACH state has to continuously monitor a Forward Access Channel (FACH) in a downlink direction, and is assigned a default Reverse Access Channel (RACH) in an uplink direction. The UE in the CELL_PCH state and in the URA_PCH state monitors a Page Channel (PCH) via an associated Page Indicator Channel (PICH) by means of a Discontinuous Reception (DRX) mode and has no uplink activity.

In the 3GPP UMTS standard, when UE is in different modes or states, an inter-frequency cell or inter system is measured according to the received system information and the reception quality in the cell where the UE is located so that such processing as cell re-selection and handover may be made. The UE in the idle mode or in CELL_PCH, URA_PCH or CELL_FACH states will trigger inter frequency/system measurement depending on the received system information and the reception quality of the cell where the UE is located, while the UE in the CELL_DCH state triggers the inter frequency/system measurement based on the system measurement control information issued by the system. In general, since the UE without a dual receiver is disable to simultaneously support the receiving and decoding of the signals on two frequencies, it is necessary to interrupt the receiving of the signal in the current cell during the inter frequency/system measurement.

In order to make an efficient use of mobile communication network resources, multicast and broadcast techniques are introduced into the 3G mobile communication system. In a mobile communication network, multicast and broadcast techniques are used for transferring data from one source to multiple destinations. Based on this, the WCDMA/GSM global standardization organization 3GPP puts forward a Multimedia Broadcast/Multicast Service (MBMS), which is a point to multipoint service transferred from one data source to multiple subscribers in a mobile communication network, so as to share network resources and raise the utilization rate of network resources, especially the utilization rate of air interface resources.

The MBMS is transferred between the UTRAN and UE in two data transmission modes: a Point to Point (PTP) mode and a Point to Multipoint (PTM) mode. The PTP mode is used in the multicast mode of the MBMS. The UE in the RRC connected mode and in the multicast mode receives control information via a Dedicated Control Channel (DCCH) and receives data information via a Dedicated Traffic Channel (DTCH). Meanwhile the PTM mode is used for the broadcast or multicast mode of the MBMS, in which the UE receives data information via an MBMS point-to-multipoint Traffic Channel (MTCH) and receives control information via an MBMS point-to-multipoint Control Channel (MCCH).

Cells monitored by UE may be divided into three types as follows.

1) Activation set cells: cells in which the information of UE is transferred. Activation set cells in a cell information list are measured by UE.

2) Monitoring set cells: cells which are in the cell information list but not activation set cells.

3) Detection set cells: cells which are neither in the cell information list nor activation set cells, but may be detected by UE.

In the 3GPP UMTS standard, a Time Division Duplex (TDD) UE is categorized into 1.28Mcps TDD UE and 3.84Mcps TDD UE.

In the CELL_FACH state, 3.84Mcps TDD UE may monitor up to:

- 32 intra frequency cells (including current serving cell where UE is located);

- 32 inter-frequency cells, including:

  - TDD cells distributed on up to 2 TDD carriers and

  - depending on UE capability, Frequency Division Duplex (FDD) cells distributed on up to 3 FDD carriers;

- depending on UE capability, 32 GSM cells distributed on up to 32 GSM carriers. In the CELL_FACH state, 1.28Mcps TDD UE may monitor up to:

- 32 intra frequency cells (including current serving cell where UE is located);
- 32 inter-frequency cells including:

  - TDD cells distributed on up to 3 TDD carriers and

  - depending on UE capability, FDD cells distributed on up to 3 FDD carriers;

- depending on UE capability, 32 GSM cells distributed on up to 32 GSM carriers.

The UE in the CELL_FACH state carries out inter frequency/system measurement to make such processing as cell re-selection and the identification of a new cell. The UE in the CELL_FACH state identifies a System Frame Number (SFN) meeting the following formula, and performs the inter frequency/system measurement in the SFN meeting the following formula:

$$\text{SFN div N} = \text{C\_RNTI mod M\_REP} + n*\text{M\_REP} \qquad \text{(Formula 1)}$$

N is the Transmission Timing Interval (TTI) (in number of 10ms frames) of the FACH having the largest TTI on the Secondary Common Control Physical Channel (SCCPCH) selected by the UE. FACHs that only carry MBMS logical channels are excluded from measurement occasion calculations. The N is the duration of the inter frequency/system measurement made by the UE;

M_REP is the measurement occasion cycle length, and M_REP = $2^k$. According to the formula above, and a FACH measurement occasion cycle length of N frames will be repeated every N*M_REP frames; where k is the FACH measurement occasion cycle length coefficient. The value of the FACH measurement occasion cycle length coefficient is read in system information in "System Information Block type 11" or "System Information Block type 12";

Cell Radio Network Temporary Identity (C_RNTI) is the C-RNTI value of the UE;

n = 0, 1, 2..., as long as SFN is below its maximum value.

The UE measures an identified inter-frequency/system cell continuously in the inter frequency/system measuring time meeting Formula 1, while searching for a new inter frequency/system cell indicated in system measurement control information issued by the UTRAN.

In an existing standard, the process of identifying a new inter-frequency cell by FDD UE receiving an MBMS PTM service is as follows.

(1) The UE receives system measurement control information issued by the UTRAN, reads inter-frequency cell information indicated in the system measurement control information, and finds out an unidentified inter-frequency cell.

(2) The UE detects such an unidentified inter-frequency cell (the UE runs on the frequency of the new inter-frequency cell indicated by the system measurement control information, and deems that the inter-frequency cell has been detected if it is found that a received signal on this frequency is strong enough).

(3) The UE successfully identifies the foregoing detected inter-frequency cell within the identifying time $T_{identify, inter}$ calculated by the following formula:

$$T_{identify,\ inter} = Ceil\left\{\frac{T_{basic\_identify\_FDD,inter}}{T_{Inter\,FACH}}\right\} \cdot T_{meas} \cdot N_{Freq,FDD} \quad ms$$

**(Formula 2)**

$T_{basic\_identify\_FDD,inter}$ = 300ms, is the maximum time allowed to identify a new inter-frequency cell for the UE;

$N_{Freq,FDD}$ is the number of FDD frequencies indicated in an information list of the inter-frequency cell in the system measurement control information;

$$T_{meas} = \left[(N_{FDD} + N_{TDD} + N_{GSM}) \cdot N_{TTI} \cdot M\_REP \cdot 10\right] \qquad \text{(Formula 3)}$$

$N_{TTI}$ equals to N in Formula 1, and M_REP may be referred to the explanation in Formula 1;

$N_{FDD}$ equals to 0 or 1; if there is an FDD inter-frequency cell in an information list of adjacent cells, NFDD = 1; otherwise, NFDD = 0;

$N_{TDD}$ equals 0 or 1; if there is a TDD inter-frequency cell in the information list of adjacent cells, NTDD = 1; otherwise, NTDD = 0;

$N_{GSM}$ equals to 0 or 1; if there is a GSM inter-frequency cell in the information list of adjacent cells, NGSM = 1; otherwise, NGSM = 0;

$T_{Inter\,FACH}$ = ($N_{TTI}$*10-2*0.5) ms, where $N_{TTI}$ equals to N in Formula 1.

(4) The UE marks the foregoing newly identified inter-frequency cell as an identified inter-frequency cell in a self-stored cell information list.

The process of performing Common Pilot Channel (CPICH) measurement by an FDD UE receiving an MBMS PTM service is as follows.

(1) The UE receives system measurement control information or system broadcast information issued by the UTRAN, and triggers CPICH measurement for an inter-frequency cell.

(2) The physical layer of the UE reports a measuring result to the higher layer of the UE within the measurement cycle length $T_{Measurement,Inter}$ calculated by the following formula:

$$T_{measuremen\ inter} = Max\left\{T_{Measuremen\_Period,Inter}, 2 \cdot T_{meas}, Ceil\left\{\frac{T_{basic\_measuremen\_FDD,inter}}{T_{InterFACH}}\right\} \cdot T_{meas} \cdot N_{Freq,FDD}\right\}$$

**(Formula 4)**

$T_{basic\_measurement\_FDD,inter}$ = 50ms;

$T_{Measurement\_Period,Inter}$ = 480ms;

For other parameters, refer to the corresponding interpretation in Formulas 2 and 3.

(3) The higher layer of the UE uses the measuring result reported by the physical layer in an internal algorithm (for example, the measuring result may be taken as an input parameter of a cell re-selection algorithm) or reports the measuring result to a Radio Network Controller (RNC).

However, in practical applications, when an FDD UE receiving the MBMS PTM service identifies a new inter-frequency cell and performs the CPICH measurement of the inter-frequency cell, it is possible that the FDD UE may be able to only use a portion of the inter frequency measuring time instead of the entire inter frequency measuring time calculated according to Formula 1 for the inter frequency measurement to ensure the demodulation performance requirement of the MBMS. Whereas, the parameter $T_{Inter\ FACH}$=NTTI*10-2*0.5 ms in Formula 2 for seeking the identifying time $T_{identify,inter}$ of identifying a new inter-frequency cell by the UE and in Formula 4 for seeking the measurement cycle length $T_{Measurement,Inter}$ of reporting the measuring result to the higher layer by the physical layer of the UE means that the UE uses the entire inter frequency measuring time calculated by Formula 1 for the inter frequency measurement. Thus the inventor of the present application, according to certain embodiments of the present invention, discovers the following issues.

If the UE identifies a new inter-frequency cell within the identifying time $T_{identify,inter}$ calculated by Formula 2, and reports the CPICH measuring result of the inter-frequency cell to the higher layer within the measurement cycle length $T_{Measurement,Inter}$ calculated by Formula 4, the UE uses the entire inter frequency measuring time calculated according to Formula 1 for the inter frequency measurement, which decreases the demodulation performance of the UE for the received MBMS.

If the UE uses a portion of the inter frequency measuring time calculated according to Formula 1 for the inter frequency measurement to ensure the demodulation performance for the received MBMS, it is possible that the UE cannot successfully identify a new inter-frequency cell within the identifying time $T_{identify,inter}$ calculated according to Formula 2, and cannot report the CPICH measuring result of the inter-frequency cell to the higher layer within the measurement cycle length $T_{Measurement,Inter}$ calculated according to Formula 4.

There is the same shortcoming in the foregoing process when an FDD UE receiving the MBMS PTM service and being in the CELL_FACH state identifies an inter system WCDMA TDD cell and reports the measuring result of the Received Signal Code Power (RSCP) on the Primary Common Control Physical Channel (PCCPCH) of the inter system WCDMA TDD cell.

In an existing standard, when the FDD UE receiving the MBMS PTM service identifies the detected new inter system WCDMA TDD cell being a monitoring set cell, it is required that an inter system WCDMA TDD cell is successfully identified within the identifying time $T_{identify,TDD}$ calculated by the following formula:

$$T_{identify,\ TDD} = Max\left\{5000, Ceil\left\{\frac{T_{basic\_iden\ tify\_TDD,\ inter}}{T_{Inter\ FACH}}\right\} \cdot T_{meas} \cdot N_{Freq,TDD}\right\}$$

(Formula 5)

$T_{basic\_identify\_TDD,inter}$ = 800ms;

$N_{Freq,FDD}$ is the number of TDD frequencies indicated in an information list of the inter-frequency cell in the system measurement control information;

For other parameters, refer to the above interpretation for Formulas 2 and 3.

In addition, it is required that the physical layer of UE reports a PCCPCH RSCP measuring result of the inter system WCDMA TDD cell to the higher layer of the UE within the measurement cycle length $T_{Measurement,Inter}$ calculated by the following formula:

$$T_{measurement,\ TDD} = Max\left\{ T_{Measurement\_Period\_TDD,\ inter}, 2 \cdot T_{meas}, Ceil\left\{ \frac{T_{basic\_measurement\_TDD,inter}}{T_{Inter\ FACH}} \right\} \cdot T_{meas} \cdot N_{Freq,TDD} \right\}$$

(Formula 6)

$T_{basic\_measurement\_TDD,inter} = 50ms;$

$T_{Measurement\_Period\_TDD,inter} = 480ms;$

For other parameters, refer to the corresponding interpretation for Formulas 2 and 3.

The inventor of the present application, according to certain embodiments of the present invention, discovers the following issues.

If UE identifies a new inter system WCDMA TDD cell within the identifying time $T_{identify,inter}$ calculated by Formula 5, and reports the PCCPCH RSCP measuring result of the inter system WCDMA TDD cell to the higher layer within the measurement cycle length $T_{Measurement,Inter}$ calculated by Formula 6, the UE has to use the entire inter frequency measuring time calculated according to Formula 1 for the inter frequency measurement, which decreases the demodulation performance of the UE for the received MBMS.

If the UE uses a portion of the inter system measuring time calculated according to Formula 1 for the inter system measurement to ensure the demodulation performance for the received MBMS, it is possible that the UE cannot successfully identify a new inter system WCDMA TDD cell within the identifying time $T_{identify,TDD}$ calculated according to Formula 5, and cannot report the PCCPCH RSCP measuring result of the inter system WCDMA TDD cell to the higher layer within the measurement cycle length $T_{Measurement,TDD}$ calculated according to Formula 6.

The TDD UE has to periodically measure the FDD inter-frequency cell, TDD inter-frequency cell and GSM cell at the interval of $T_{meas}$, where $T_{meas}$ meets the requirement of the following formula:

$$T_{meas} = \left[ \left( N_{FDD} + N_{TDD} + N_{GSM} \right) \cdot N_{TTI} \cdot M\_REP \cdot 10 \right]$$

(Formula 7)

For the meaning of the parameters in the formula, refer to the interpretation for Formula 3.

The TDD UE continuously measures the identified inter-frequency cell within such inter frequency/system measuring time, and searches for the new inter frequency/system cell indicated in the system measurement control information issued by the UTRAN.

In an existing standard, the process of measuring the inter frequency/system cell by the TDD UE receiving the MBMS PTM service is as follows.

(1) The TDD UE receives system measurement control information issued by the UTRA, and, according to the system measurement control information, triggers the inter frequency/system measurement of a corresponding inter frequency/system cell.

(2) The TDD UE conducts the inter frequency/system cell measurement within the measuring time calculated by Formula 1 and/or idle interval (in the TDD mode, there are uplink and downlink slots in a frame, and the slot in which the TDD UE does not receive or transmit data is the idle interval of the TDD UE); the TDD UE has to interrupt the reception of the MBMS PTM service within the measuring time of the inter frequency/system cell.

(3) The TDD UE receives the MBMS PTM service when no inter frequency/system measurement is performed.

In practical applications, however, since the TDD UE receiving the MBMS PTM service will interrupt the reception of the MBMS PTM service when performing inter frequency/system measurement, moreover, the time at which the TDD UE interrupts the reception of the MBMS PTM service is different from another, it is difficult for the network side to determine which MBMS PTM service information has not been received by the TDD UE and has to be resent, thus the reception quality of the MBMS PTM service sent to the TDD UE is poor.

In an existing standard, the process of identifying a new inter-frequency cell by the TDD UE receiving the MBMS PTM service is as follows.

(1) The TDD UE receives system measurement control information issued by the UTRAN, reads inte-frequency cell information indicated in the system measurement control information, and searches for an unidentified inter-frequency cell.

(2) The TDD UE detects such an unidentified inter-frequency cell (UE runs on the frequency of the new inter-frequency cell indicated by the system measurement control information, and deems that the inter-frequency cell has been detected if it is found that the received signal on this frequency is strong enough).

(3) The TDD UE successfully identifies the foregoing detected inter-frequency cell within the identifying time $T_{identify,inter}$ calculated by the following formula:
The time necessary for 3.84Mcps TDD UE to identify a newly detected inter frequency TDD cell in the monitoring set is:

$$T_{identify\ inter} = Max\left\{5000, Ceil\left\{\frac{T_{basic\_identify\_TDD\ inter}}{T_{Inter\ FACH}}\right\} \cdot T_{meas} \cdot N_{Freq,TDD}\right\} \qquad \text{(Formula 8)}$$

$T_{basic\_identify\_TDD,inter}$ = 800ms, which is the maximum time period allowed to identify a new TDD cell for the TDD UE;

$N_{Freq,TDD}$ is the number of TDD frequencies indicated in an information list of the inter-frequency cell in the system measurement control information indicated by the UTRAN;

For other parameters, refer to the corresponding interpretation in Formulas 2 and 3.
The time necessary for 1.28Mcps TDD UE to identify a newly detected inter frequency TDD cell in the monitoring set is:

$$T_{identify\ inter} = Max\left\{5000, N_{basic\_identify\_TDD,inter} \cdot \frac{T_{Measurement\ Period,\ Inter}}{N_{Inter\ FACH}} \cdot N_{Freq}\right\}ms \qquad \text{(Formula 9)}$$

$T_{Measurement\_Period\ Inter}$ =480ms;

$N_{Inter,FACH}$ is the number of the sub-frames where the signals of both DwPCH and PCCPCH of the target inter frequency TDD cell are located, and the signals may be received within the measurement period $T_{measurement\_Period\ Inter}$. This $N_{Inter,FACH}$ is obtained according to channel allocation and the measuring time in the CELL_FACH state (including the idle interval and the measuring time calculated by Formula 1) with a 2*0.1ms tolerance considered for implementation. Within the measuring time calculated by Formula 1, UE measures the inter-frequency cell which cannot be measured in the idle interval.

$N_{basic\ identify\ TDD,\ Inter}$= 160, which is the number of sub-frames within $T_{basic\ identify\ TDD}$, inter.

$N_{Freq}$ is the number of TDD frequencies indicated in an information list of the inter-frequency cell in the system measurement control information indicated by the UTRAN.

(4) The TDD UE marks the foregoing newly identified TDD inter-frequency cell as an already identified TDD inter-frequency cell in a self-stored cell information list.

In addition, the process of measuring a Primary Common Control Physical Channel (PCCPCH) of an inter frequency TDD cell by the TDD UE receiving the MBMS PTM service is as follows.

(1) The TDD UE receives system measurement control information or system broadcast information issued by the UTRAN, and triggers the PCCPCH measurement of the inter frequency TDD cell.

(2) The physical layer of the TDD UE reports a measuring result to the higher layer within the measurement cycle length $T_{Measurement,Inter}$ calculated by the following formula:

The physical layer of 3.84Mcps TDD UE will report the PCCPCH measuring result of the inter frequency TDD cell to the higher layer within the measurement cycle length $T_{Measurement,Inter}$ calculated by the following formula:

$$T_{measurement\ inter} = Max\left\{ T_{measurement\ period\ TDD\ inter}, 2 \cdot T_{meas}, Ceil\left\{ \frac{T_{basic\ measurement\ TDD\ inter}}{T_{Inter\ FACH}} \right\} \cdot T_{meas} \cdot N_{Freq} \right\}$$

(Formula 10)

$T_{basic\ measurement\ TDD,inter}$ = 50ms;

$T_{Measurement\ Period\ TDD\ Inter}$ = 480ms;

For other parameters, refer to the corresponding interpretation in Formulas 2 and 3.

The physical layer of 1.28Mcps TDD UE reports the PCCPCH measuring result of the inter frequency TDD cell to the higher layer within the measurement cycle length $T_{Measurement,Inter}$ calculated by the following formula:

$$T_{measurement\ inter} = Max\left\{ T_{Measurement\_Period,\ Inter}, N_{basic\_measurement\_TDD\ inter} \cdot \frac{T_{Measurement\_Period,\ Inter}}{N_{Inter\ FACH}} \cdot N_{Freq} \right\} ms$$

(Formula 11)

$T_{basic\_measurement\_TDD\ inter}$ = 50ms;

For other parameters, refer to the corresponding interpretation for Formula 9.

(3) The higher layer of the TDD UE uses the measuring result reported by the physical layer in an internal algorithm (for example, the measuring result may be taken as an input parameter of the cell re-selection algorithm) or reports the measuring result to an RNC.

In practical applications, however, when the TDD UE receiving the MBMS PTM service identifies a new inter frequency TDD cell and performs the PCCPCH measurement of the inter frequency TDD cell, it is possible that the TDD UE cannot carry out the inter frequency measurement using the idle interval and/or the entire inter frequency measuring time calculated according to Formula 1. Instead, the TDD UE may be able to only use a portion of the inter frequency measuring time for inter frequency measurement. Whereas, the parameter $T_{Inter\ FACH}$=(NTTI*10-2*0.5)ms, in Formulas 8 and 9 for seeking the identifying time $T_{identify,inter}$ for the TDD UE to identify a new inter-frequency cell and in Formulas 10 and 11 for seeking the measurement cycle length $T_{Measurement,Inter}$ for the physical layer of the TDD UE to report the PCCPCH measuring result to the higher layer, means that the TDD UE has to use the entire inter frequency measuring time calculated by Formula 1 for the inter frequency measurement. Thus, the inventor of the present application, according to certain embodiments of the present invention, discovers the following issues.

If the TDD UE successfully identifies a new inter-frequency cell within the identifying time $T_{identify,inter}$ calculated by Formulas 8 and 9, and reports the PCCPCH measuring result of the inter frequency TDD cell to the higher layer within the measurement cycle length $T_{Measurement,Inter}$ calculated by Formulas 10 and 11, it has to use the entire idle interval and/or the entire inter frequency measuring time calculated according to Formula 1 for the inter frequency measurement, thereby decreasing the demodulation performance of the TDD UE for the received MBMS.

If the TDD UE uses a portion of the idle interval and/or a portion of the inter frequency measuring time calculated according to Formula 1 for the inter frequency measurement to ensure the demodulation performance for the received MBMS, it is possible that the TDD UE cannot identify a new inter frequency TDD cell within the identifying time $T_{identify,inter}$ calculated according to Formulas 8 and 9, and cannot report the PCCPCH measuring result of the inter-frequency cell to the higher layer within the measurement cycle length $T_{Measurement,Inter}$ calculated according to Formulas 10 and 11.

There is the same shortcoming in the foregoing process in which the TDD UE receiving the MBMS PTM service identifies an inter system WCDMA FDD cell and reports the measuring result of the Common Pilot Channel (CPICH) of the inter system WCDMA FDD.

In an existing standard, when the TDD UE receiving the MBMS PTM service identifies a newly detected inter system WCDMA FDD cell in the monitoring set, it is required that an inter system WCDMA FDD cell is identified within the identifying time $T_{identify,TDD}$ calculated by the following formula:

The time necessary for 3.84Mcps TDD UE to identify a newly detected WCDMA FDD inter-frequency cell in the monitoring set is:

$$T_{identify\ FDD\ inter} = Max\left\{5000, Ceil\left\{\frac{T_{basic\_identify\_FDD\ inter}}{T_{Inter\ FACH}}\right\} \cdot T_{meas} \cdot N_{Freq,FDD}\right\} \quad \text{(Formula 12)}$$

$T_{basic\_identify\_TDD,inter}$ = 800ms, which is the maximum time allowed to identify a new WCDMA cell for the TDD UE;

$N_{Freq,FDD}$ is the number FDD frequencies indicated in an information list of inter-frequency cells in the system measurement control information indicated by the UTRAN;

$T_{Inter\ FACH}$=(NTTI*10-2*0.5)ms;

For other parameters, refer to the corresponding interpretation in Formulas 2 and 3.

The time necessary for 1.28Mcps TDD UE to identify a newly detected WCDMA FDD cell in the monitoring set is:

$$T_{identify\_FDD\ inter} = Max\left\{5000, T_{basic\ identify\ FDD\ inter} \cdot \frac{T_{Measurement\_Period\ FDD\ inter}}{T_{Inter,FACH}} \cdot N_{Freq}\right\}ms$$

$$\text{(Formula 13)}$$

$T_{Measurement\_Period\ FDD\ inter}$= 480ms;

$T_{inter,FACH}$ is the minimum time for performing an FDD measurement within the measurement period $T_{Measurement\_Period\_FDD,inter}$, which is obtained according to channel allocation and the measuring time in the CELL_ FACH state (including the idle interval and the measuring time calculated according to Formula 1) with a 2*0.1ms tolerance considered for implementation. Suppose that measurement is allowed at the measuring window length in the idle interval, UE measures the inter-frequency cell that cannot be measured in the idle interval within the measuring time calculated by Formula 1.

$T_{basic\_identify\_FDD,inter}$ 800ms, which is the maximum time allowed to identify a new FDD cell for the FDD UE;

$N_{Freq,FDD}$ is the number of FDD frequencies indicated in an information list of inter-frequency cells in the system measurement control information indicated by the UTRAN.

In an exist specification, the physical layer of the TDD UE receiving an MBMS PTM service reports the CPICH measuring result to the higher layer within the measurement cycle length $T_{Measurement\ FDDInter}$ calculated by the following formula:

The physical layer of 3.84Mcps TDD UE reports the CPICH measuring result of the inter system WCDMA FDD cell to the higher layer within the measurement cycle length $T_{Measurement,Inter}$ calculated by the following formula:

$$T_{measurement\ FDD\ inter} = Max\left\{T_{measurement\ period\ FDD\ inter}, 2 \cdot T_{meas}, Ceil\left\{\frac{T_{basic\_measurement\_FDD\ inter}}{T_{Inter\ FACH}}\right\} \cdot T_{meas} \cdot N_{Freq,FDD}\right\}$$

$$\text{(Formula 14)}$$

$T_{basic\_measurement\_FDD\ inter} = 50ms;$

$T_{Measurement\_Period\ FDD\ inter} = 480ms;$

$T_{Inter\ FACH} = (NTTI* 10-2*0.5)ms;$

For other parameters, refer to the corresponding interpretation in Formulas 2 and 3.

The physical layer of 1.28Mcps TDD UE reports the CPICH measuring result of the inter system WCDMA FDD cell to the higher layer within the measurement cycle length $T_{Measurement\ FDD\ inter}$ calculated by the following formula:

$$T_{measurement\_FDDinter} = Max\left\{ T_{Measurement\_Period\ FDD\ inter}\ ,\ T_{basic\_measurement\_FDDinter} \cdot \frac{T_{Measuremen\_Period\_FDDinter}}{T_{Inter,FACH}} \cdot N_{Freq} \right\} ms$$

$$\text{(Formula 15)}$$

$T_{basic\_measurement\_FDD\ inter} = 50ms;$ and for other parameters, refer to the corresponding interpretation in Formulas 14.

The inventor of the present application, according to certain embodiments of the present invention, discovers the following issues:

If the TDD UE successfully identifies a new inter system WCDMA TDD cell within the identifying time $T_{identify\ TDD}$ calculated by Formulas 12 and 13, and reports the CPICH measuring result of the inter system WCDMA TDD cell to the higher layer within the measurement cycle length $T_{Measurement,Inter}$ calculated by Formulas 14 and 15, the TDD UE has to use the entire idle interval and/or the entire inter system measuring time calculated according to Formula 1 for the inter frequency measurement, thereby the demodulation performance of the TDD UE for the received MBMS is decreased

If the TDD UE uses a portion of the idle interval and/or a portion of the inter system measuring time calculated according to Formula 1 for inter system measurement to ensure the demodulation performance for the received MBMS, it is possible that the TDD UE cannot successfully identify a new inter system WCDMA TDD cell within the identifying time $T_{identify,inter}$ calculated according to Formulas 12 and 13, and is disable to report the CPICH measuring result of the inter system WCDMA TDD cell to the higher layer within the measurement cycle length $T_{Measurement,TDD\ inter}$ calculated according to Formulas 14 and 15.

In addition, as mentioned above, there are shortcomings in the process in which the TDD UE measures and identifies an inter frequency TDD cell and inter system WCDMA FDD cell as well as reports the measuring result. Similarly, there are also shortcomings in the process in which the TDD UE measures and identifies a GSM cell as well as to report the measuring result.

Document EP 1478198 A1 discloses a mechanism for inter-frequency measurements with the purpose of more accurate decision. Therefore, the UE only process a subset of the received importance layers to save processing time that can be used for the measurements. Particularly, the UE may not process the enhanced layers of the broadcast data stream received but only the base layers. This would provide a processing free time corresponding to the frame length of the enhanced layers, which could be used for the inter-frequency measurements. In the prior art, saved processing time is provided to measurement at the expense of lowering quality of receiving MBMS.

Document 3GPP TS 25.331 version 6.4.0 Release 6, 8.5.11 section discloses a formula with SFN value. The SFN value fulfilling the following equation:

$$\text{SFN div N} = \text{C\_RNTI mod M\_REP} + n * M\_REP$$

where

- N is the TTI (in number of 10ms frames) of the FACH having the largest TTI on the SCCPCH monitored by UE

- C_RNTI is the C-RNTI value of the UE stored in the variable C_RNTI

- M_REP is the Measurement Occasion cycle length. According to the equation above, a FACH Measurement Occasion of N frames will be repeated every N * M_REP frame, and M_REP = 2k.
  where,

- k is the FACH Measurement occasion cycle length coefficient. The value of the FACH Measurement occasion cycle length coefficient is read in system information in "System Information Block type 11" or "System Information Block type 12" in the IE "FACH measurement occasion info".

- n = 0,1,2... as long as SFN is below its maximum value

The UE is allowed to measure on other occasions in case the UE moves "out of service" area or in case it can simultaneously perform the ordered measurements. A UE in TDD mode shall use the frame(s) with the SFN value fulfilling the above equation for neighbor cells measurements.

Hence it is highly desirable to improve inter frequency/system measurement and identifying as well as reporting techniques.

## Summary of the invention

Embodiments of the present invention provide an inter frequency/system measurement method for UE receiving broadcast/multicast information, for identifying an inter frequency/system cell and reporting a measuring result of an inter frequency/system cell so as to implement the measurement of an inter frequency/system cell on the basis of ensuring demodulation performance of the broadcast/multicast information, and ensure the measuring performance.

Embodiments of the present invention also provide a corresponding apparatus.

According to the inter frequency/system measurement method based on receiving broadcast/multicast information which is provided by the embodiments of the present invention, during the process in which the UE in the state of receiving broadcast/multicast information performs inter frequency/system measurement of an inter frequency/system cell, with the solutions for ensuring the demodulation performance requirement for the received broadcast/multicast information, the TDD or FDD UE receiving an MBMS PTM service may perform inter frequency/system measurement with the MBMS PTM service demodulation performance ensured.

According to the method of the invention with the solutions for ensuring the demodulation performance requirement for the received broadcast/multicast information, the issue that the UE receiving the MBMS PTM service may use only a portion of the measuring time (of the inter frequency/system or the intra one) to make measurement (of the inter frequency/system or the intra one), and the performance requirement of the time for the UE to ensure the identification of a new cell (of the inter frequency/system or the intra one) or report the measurement result of the new cell (of the inter frequency/system or the intra one) had to be determined within the entire measuring time (of the inter frequency/system or the intra one). Now with the method for inter frequency/system measurement based on receiving broadcast/multicast information which is provided by the embodiments of the present invention, such a dilemma could be solved so as to meet the measurement performance requirement of the UE with the demodulation performance requirement ensured for the received MBMS.

## Brief Description of the Drawings

Fig. 1 is a simplified schematic diagram illustrating the process of identifying an inter-frequency cell by FDD UE according to an embodiment of the present invention.

Fig. 2 is a simplified flowchart illustrating the process of reporting a CPICH measuring result of an inter-frequency cell to the higher layer by FDD UE according to an embodiment of the present invention.

Fig. 3 is a simplified schematic diagram illustrating the process of identifying an inter system WCDMA TDD cell by FDD UE according to an embodiment of the present invention.

Fig. 4 is a simplified flowchart illustrating the process of reporting to the higher layer by FDD UE a PCCPCH RSCP measuring result of an inter system WCDMA TDD cell according to an embodiment of the present invention.

Fig. 5 is a simplified schematic diagram illustrating the process of identifying an inter system GSM cell by FDD UE according to an embodiment of the present invention.

## Embodiments of the Invention

When a TDD UE receiving an MBMS PTM service performs inter frequency/system measurement, the receiving quality of the MBMS PTM service will be lowered, which is solved by a method for inter frequency/system measurement for UE receiving broadcast/multicast information, provided by embodiments of the present invention. In the method, it is focused that the TDD UE receiving the MBMS PTM service could perform the inter frequency/system measurement with the demodulation performance ensured for the MBMS PTM service.

In the disclosure, the embodiment is merely an example, which should not unduly limit the scope of the claims. One of ordinary skill in the art would recognize many variations, alternatives and modifications.

According to an embodiment of the present invention, a specific implementing process for a TDD UE performing inter frequency/system measurement is as follows.

1) The TDD UE receives system measurement control information issued by the UTRAN, and triggers the inter frequency/system measurement of an inter frequency/system cell according to the system measurement control information.

2) The TDD UE, on the basis of ensuring demodulation performance of the MBMS PTM service , selects a portion of the idle interval and/or the measuring time calculated according to Formula 1 as the inter frequency/system measuring time (e.g., reserve a portion of the idle interval and/or the measuring time for the inter frequency/system measurement).

3) The TDD UE performs inter frequency/system measurement within the inter frequency/system measuring time selected as described above, and receives the MBMS PTM service in other time to satisfy the demodulation performance requirement for the received MBMS PTM service.

According to the method provided by the embodiments of the present invention, a specific implementing process for FDD UE receiving MCCH information or FDD UE receiving MCCH information and MBMS PTM service information performing inter frequency/system measurement is as follows.

1) The FDD UE receives system measurement control information issued by the UTRAN, and triggers inter frequency/ system measurement of an inter frequency/system cell according to the system measurement control information.

2) The FDD UE, on the basis of ensuring demodulation performance of the MCCH information (or the MCCH information and MBMS PTM service information), selects a portion of the measuring time calculated according to Formula 1 as the inter frequency/system measuring time (i.e., reserve a portion of the measuring time for the inter frequency/system measurement).

3) The FDD UE performs inter frequency/system measurement within the inter frequency/system measuring time selected as described above, and receives the MCCH information (or receives the MCCH information and MBMS PTM service information) in other time to satisfy the demodulation performance requirement for the received MCCH information (or the received MCCH information and MBMS PTM service information).

When the method provided by the embodiments of the present invention is used for the TDD UE receiving broadcast/multicast point-to-multipoint control information (i.e., MCCH information), inter frequency/system measurement may also be performed with the demodulation performance ensured for the received MCCH information. The specific implementing process is similar to the above process performed by the TDD UE receiving the MBMS PTM service and is not discussed here in detail.

The embodiments of present invention further propose a method for determining the measurement performance requirement for UE receiving broadcast/multicast information. By the obtained measuring time (of the inter frequency/ system or the intra frequency) in which the demodulation performance of the MBMS may be ensured, the measurement performance requirement of the UE is determined. In the method for determining the measurement performance, such a dilemma is solved that, on one hand, the UE receiving an MBMS PTM service would perform measurement (of the inter frequency/system or the intra frequency) using a portion of the measuring time (of the inter frequency/system or the intra frequency) for ensuring the demodulation performance requirement of the MBMS; on the other hand, the UE needs to ensure that the identification of a new cell (of the inter frequency/system or the intra frequency) or the report of a measuring result of a new cell (of the inter frequency/system or the intra frequency) is completed within the time required by the measuring performance which had to be determined within the entire measuring time (of the inter frequency/system or the intra frequency).

According to the method for determining the measuring performance requirement provided by the embodiments of this invention, UE (e.g., TDD UE or FDD UE) receiving broadcast/multicast information (e.g., an MBMS PTM service) determines the measurement performance requirement by taking the demodulation performance requirement of the broadcast/multicast information (e.g., the MBMS PTM service) into consideration as a whole, in this way, the identification of a new cell or the report of a measuring result may be completed within the time required by the measuring performance.

When the method for determining the measuring performance requirement is performed, if the UE is FDD UE, the following objective may be achieved.

The method is used for the FDD UE receiving the MBMS PTM service and in the CELL_FACH state to identify a new inter frequency/system cell. According to the method, when an identifying time for the FDD UE identifying a new inter frequency/system cell is determined, the demodulation performance of the FDD UE for the received MBMS is considered to satisfy the demodulation performance requirement for the received MBMS.

The method is also used for the physical layer of the FDD UE receiving the MBMS PTM service and in the CELL_FACH state to report a measuring result of an inter frequency/system cell to the higher layer. According to the method, when a measurement period for the FDD UE capable of submitting the measuring result is determined, the demodulation performance of the FDD UE for the received MBMS is considered to ensure the demodulation performance requirement for the received MBMS.

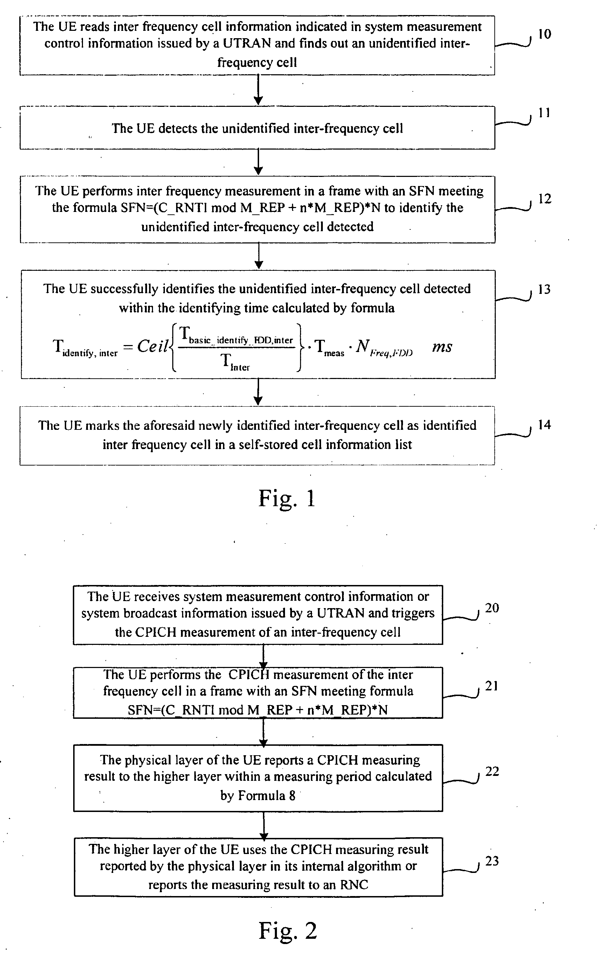

Fig. 1 is a simplified schematic diagram illustrating the process of identifying an inter-frequency cell by FDD UE according to an embodiment of the present invention. The process for FDD UE receiving an MBMS PTM service (the MBMS PTM service hereinafter may be replaced by MCCH information) and in the CELL_FACH state successfully identifying a new inter-frequency cell, for example, includes the following steps.

Step 10: The FDD UE receives system measurement control information issued by the UTRAN, reads information of inter-frequency cells in the system measurement control information, and finds out an unidentified inter-frequency cell.

Step 11: The FDD UE detects the unidentified inter-frequency cell as mentioned above.

Step 12: The FDD UE performs inter frequency measurement during a frame with the SFN fulfilling the following formula to identify the unidentified inter-frequency cell detected in Step 11:

$$\text{SFN} = (\text{C\_RNTI mod M\_REP} + n * \text{M\_REP}) * N \qquad \text{(Formula 1)}$$

N is the Transmission Timing Interval (TTI) (in number of 10ms frames) of the FACH having the largest TTI on the SCCPCH selected by the FDD UE. FACHs that only carry MBMS logical channels are excluded from measurement occasion calculations.

M_REP is the measurement occasion cycle length, and $\text{M\_REP} = 2^k$, where k is the FACH measurement occasion cycle length coefficient. The value of the FACH measurement occasion cycle length coefficient is read in system information in "System Information Block type 11" or "System Information Block type 12";

C_RNTI is the Radio Network Temporary Identity (RNTI) value of the FDD UE;

n = 0, 1, 2 ... as long as the SFN is below its maximum value.

Step 13: The FDD UE identifies the unidentified inter-frequency cell detected in Step 11 within the identifying time calculated by the following formula:

$$T_{identify,\ inter} = Ceil \left\{ \frac{T_{basic\_identify\_FDD,inter}}{T_{Inter}} \right\} \cdot T_{meas} \cdot N_{Freq,FDD} \quad ms \qquad \text{(Formula 16)}$$

$T_{identify,inter}$ represents the identifying time for the FDD UE successfully identifying a new inter-frequency cell;

$T_{basic\_identify\_FDD,inter}$ = 300ms, is the maximum time allowed to identify an inter-frequency cell for the FDD UE;

$N_{Freq,FDD}$ is the number of FDD frequencies indicated in an information list of inter-frequency cells in the system measurement control information issued by the UTRAN;

$$T_{meas} = \left[ \left( N_{FDD} + N_{TDD} + N_{GSM} \right) \cdot N_{TTI} \cdot M\_REP \cdot 10 \right]$$

$N_{TTI}$ equals to the N in Step 12; M_REP equals to the M_REP in Step 12;

$N_{FDD}$ equals to 0 or 1; if there is an FDD inter-frequency cell in an information list of adjacent cells, $N_{FDD} = 1$; otherwise, $N_{FDD} = 0$;

$N_{TDD}$ equals to 0 or 1; if there is a TDD inter-frequency cell in the information list of adjacent cells, $N_{TDD} = 1$; otherwise, $N_{TDD} = 0$;

$N_{GSM}$ equals to 0 or 1; if there is a GSM inter-frequency cell in the information list of adjacent cells, $N_{GSM} = 1$; otherwise, $N_{GSM} = 0$;

$T_{Inter}$ is the available inter frequency measuring time determined by the FDD UE with the demodulation performance ensured for the received MBMS; if switching time of a receiver is considered, $T_{Inter}$ equals to the available inter frequency measuring time minus the switching time of the receiver (ms).

The switching time of the receiver is determined according to the hardware ability of the receiver; at present the switching time of the receiver generally equals to 2*0.5ms = 1 ms.

Step 14: The FDD UE marks the successfully identified inter-frequency cell in Step 13 as an identified inter-frequency cell in a self-stored cell information list.

An exemplary implementation in Step 13 includes:

The measuring time in $T_{Inter}$ is a portion of $N_{TTI}$ frames and not higher than 25 % of the TTI length of the multimedia broadcast/multicast point-to-multipoint service channel (MTCH). The specific calculating method includes:

Suppose the largest TTI on the SCCPCH monitored by the FDD UE is 20ms, and FACHs that only carry MBMS logical channels are excluded from measurement occasion calculations., i.e., $N_{TTI} = 2$, and the repetition time is 80ms (i.e., $T_{meas}$). The TTI length of the multimedia broadcast/multicast point-to-multipoint service channel (MTCH) is 40ms, so the measuring time available for the FDD UE is 10ms.

As switching time of the receiver = 1 ms, $T_{Inter} = 9$ ms, and then

$$T_{identify,\ inter} = Ceil \left\{ \frac{T_{basic\_identify\_FDD,inter}}{T_{Inter}} \right\} \cdot T_{meas} \cdot N_{Freq,FDD} \quad ms = Ceil \left\{ \frac{300}{9} \right\} \cdot 80 \cdot 1ms = 2720\ ms$$

where $N_{Freq,FDD} = 1$.

Fig. 2 is a simplified flowchart illustrating the process of reporting a CPICH measuring result of an inter-frequency cell to the higher layer by FDD UE according to an embodiment of the present invention. The process for the FDD UE receiving the MBMS PTM service and in the CELL_FACH state performing CPICH measurement for the inter-frequency cell and report a CPICH measuring result, for example, includes the following steps.

Step 20: The FDD UE receives system measurement control information issued by the UTRAN or system broadcast information, and triggers the CPICH measurement of an inter-frequency cell.

Step 21: The FDD UE performs CPICH measurement during a frame with the SFN calculated by the following formula:

$$\text{SFN} = (C\_RNTI \bmod M\_REP + n*M\_REP)*N \qquad \text{(Formula 17)}$$

For the interpretation of the parameters in the formula, refer to the aforesaid.

Step 22: The physical layer of the TDD UE reports the CPICH measuring result to the higher layer within the measurement cycle length $T_{Measurement,Inter}$ (i.e., the reporting time) calculated by the following formula:

$$T_{\text{measuremen inter}} = Max\left\{T_{\text{Measuremen\_Period,Inter}}, 2 \cdot T_{\text{meas}}, Ceil\left\{\frac{T_{\text{basic\_measuremen\_FDD,inter}}}{T_{\text{Inter}}}\right\} \cdot T_{\text{meas}} \cdot N_{Freq,FDD}\right\}$$

(Formula 18)

$T_{\text{measurement inter}}$ represents the measuring cycle for the physical layer of the FDD UE reporting the measuring result of the CPICH of the inter-frequency cell;

$T_{\text{basic\_measurement\_FDD,inter}}$ = 50ms;

$T_{\text{Measurement\_Period,Inter}}$ =480ms;

$T_{\text{Inter}}$ is the available inter frequency measuring time determined by the FDD UE with the demodulation performance ensured for the received MBMS; if switching time of a receiver is considered, $T_{\text{Inter}}$ equals to the available measuring time minus the switching time of the receiver (ms), and the switching time of the receiver is determined according to the hardware ability of the receiver and generally equals to 1 ms.

For the interpretation of the parameters, refer to the aforesaid.

Step 23: The higher layer of the FDD UE uses the CPICH measuring result reported by the physical layer in its internal algorithm or reports the CPICH measuring result to the RNC.

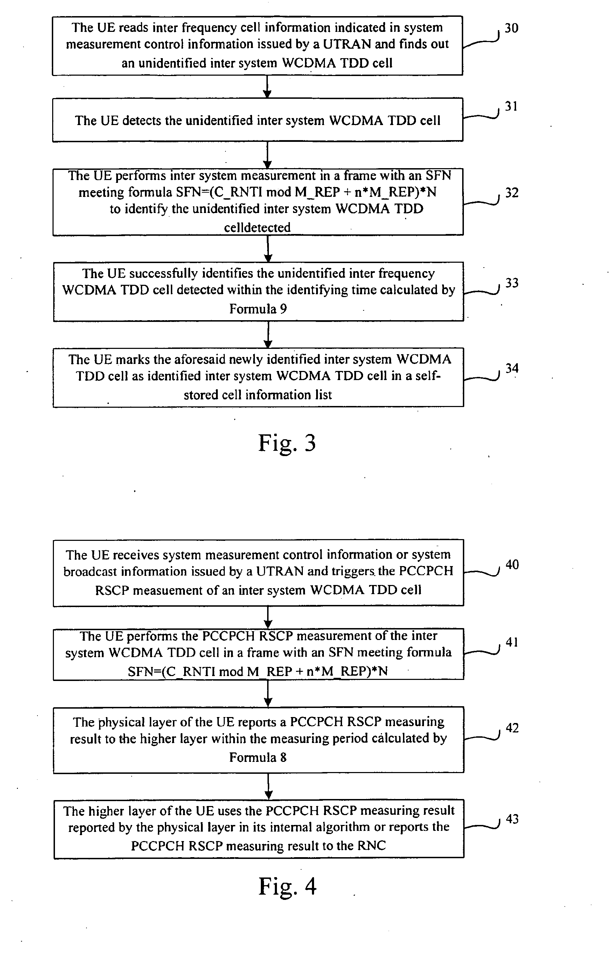

Fig. 3 is a simplified schematic diagram illustrating the process of identifying an inter system WCDMA TDD cell by FDD UE according to an embodiment of the present invention. The process for the FDD UE receiving an MBMS PTM service and in the CELL_FACH state successfully identifying a new inter system WCDMA TDD cell, for example, includes the following steps.

Step 30: The FDD UE receives system measurement control information issued by the UTRAN, reads inter-frequency cell information indicated in the system measurement control information, and finds out an unidentified inter system WCDMA TDD cell.

Step 31: The FDD UE detects the unidentified inter system WCDMA TDD cell.

Step 32: The FDD UE performs inter system measurement during a frame with the SFN calculated by the following formula to identify the unidentified inter system WCDMA TDD cell detected in Step 31:

SFN= (C_RNTI mod M_REP + n*M_REP)*N

For the interpretation of the parameters in the formula, refer to the aforesaid.

Step 33: The FDD UE successfully identifies the unidentified inter system WCDMA TDD cell detected in Step 31 within the identifying time calculated by the following formula:

$$T_{\text{identify, TDD}} = Max\left\{5000, Ceil\left\{\frac{T_{\text{basic\_identify\_TDD,inter}}}{T_{\text{Inter}}}\right\} \cdot T_{\text{meas}} \cdot N_{Freq,TDD}\right\}$$

(Formula 19)

$T_{\text{identify,TDD}}$ represents the identifying time for the FDD UE successfully identifying an inter system WCDMA TDD cell;

$T_{\text{basic\_identify\_TDD,inter}}$ = 800ms, which is the maximum time allowed to identify a new WCDMA TDD cell for the FDD UE;

$N_{\text{Freq,TDD}}$ is the number of TDD frequencies indicated in an information list of the inter-frequency cell in the system measurement control information issued by the UTRAN;

$T_{\text{Inter}}$ is the available inter system measuring time determined by the FDD UE with the demodulation performance ensured for the received MBMS; if switching time of a receiver is considered, $T_{\text{Inter}}$ equals to the available measuring time minus the switching time of the receiver (ms), and the switching time of the receiver is determined according to the hardware ability of the receiver and is generally equal to 1 ms;

For the interpretation of the parameters, refer to the aforesaid.

Step 34: The FDD UE marks the inter-frequency cell successfully identified in Step 33 as an identified inter system WCDMA TDD cell in a self-stored cell information list.

Fig. 4 is a simplified flowchart illustrating the process of reporting to the higher layer by FDD UE a PCCPCH RSCP measuring result for an inter system WCDMA TDD cell according to an embodiment of the present invention. The process for the FDD UE receiving the MBMS PTM service and in the CELL_FACH state performing PCCPCH RSCP measurement of the inter system WCDMA TDD cell and reporting a PCCPCH RSCP measuring result, for example, includes the following steps.

Step 40: The FDD UE receives system measurement control information or system broadcast information issued by the UTRAN, and triggers the PCCPCH RSCP measurement of an inter system WCDMA TDD cell;

Step 41: The FDD UE performs PCCPCH RSCP measurement of the inter system WCDMA TDD cell during a frame with the SFN calculated by the following formula:

SFN= (C_RNTI mod M_REP + n*M_REP)*N

For interpretation of the parameters in the formula, refer to the aforesaid.

Step 42: The physical layer of the TDD UE reports the PCCPCH RSCP measuring result to the higher layer within the measurement cycle length $T_{Measurement,Inter}$ calculated by the following formula:

$$T_{measurement,\ TDD} = Max\left\{ T_{Measurement\_Period\_TDD,inter}, 2 \cdot T_{meas}, Ceil\left\{ \frac{T_{basic\_measurement\_TDD,inter}}{T_{Inter}} \right\} \cdot T_{meas} \cdot N_{Freq,TDD} \right\}$$

(Formula 20)

$T_{basic\_measurement\_TDD,inter}$= 50ms;

$T_{Measurement\_Period\_TDD,inter}$ = 480ms;

$N_{Freq,TDD}$ is the number of the TDD frequencies indicated in an information list of the inter-frequency cell in the system measurement control information issued by the UTRAN;

$T_{Inter}$ is the available inter system measuring time determined by the FDD UE with the demodulation performance ensured for the received MBMS; if switching time of a receiver is considered, $T_{Inter}$ equals to the available measuring time minus the switching time of the receiver (ms), and the switching time of the receiver is determined according to the hardware ability of the receiver and is generally equal to 1 ms;

Step 43: The higher layer of the FDD UE uses the PCCPCH RSCP measuring result reported by the physical layer in its internal algorithm or reports the PCCPCH RSCP measuring result to the RNC.

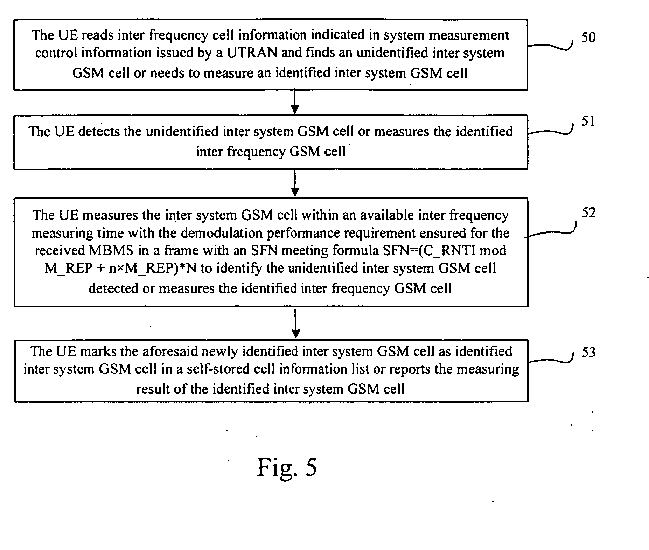

Fig. 5 is a simplified schematic diagram illustrating the process of identifying an inter system GSM cell by FDD UE according to an embodiment of the present invention. The process for the FDD UE receiving an MBMS PTM service and in the CELL_FACH state successfully identifying a new inter system GSM cell or performing measurement for the identified inter system GSM cell, for example, includes the following steps.

Step 50: The FDD UE receives system measurement control information issued by the UTRAN, reads inter-frequency cell information indicated in the system measurement control information, and finds out an unidentified inter frequency WCDMA TDD cell or needs to perform measurement for the identified inter system GSM cell;

Step 51: The FDD UE detects the unidentified inter system GSM cell or measures the aforesaid identified GSM cell;

Step 52: The FDD UE performs inter system GSM measurement during a frame with the SFN calculated by the following formula to identify the unidentified inter system GSM cell detected in Step 51 or measures the identified inter system GSM cell. The specific measuring time is the available inter frequency measuring time with the demodulation performance ensured for the received MBMS; if there is a switching process of a receiver, the specific measuring time equals to the available inter frequency measuring time minus the switching time of the receiver (the switching time of the receiver is determined according to the hardware ability of the receiver and generally equals to 1 ms):

SFN= (C_RNTI mod M_REP + n*M_REP)*N

$N_{TTI}$ is the TTI (in number of 10ms frames) of the FACH having the largest TTI on the SCCPCH selected by the UE. FACHs that only carry MBMS logical channels are excluded from measurement occasion calculations;

M_REP is the measurement occasion cycle length, M_REP = $2^k$, where k is the FACH measurement occasion cycle length coefficient. The value of the FACH measurement occasion cycle length coefficient is read in system information in "System Information Block type 11" or "System Information Block type 12";

C_RNTI is the Radio Network Temporary Identity (RNTI) value of the FDD UE;

n = 0, 1, 2 ... as long as the SFN is below its maximum value.

Step 53: The FDD UE marks the successfully identified inter system GSM cell as an identified inter-frequency cell in a self-stored cell information list, or reports the measuring result of the identified inter system GSM cell.

The above process may be used for FDD UE receiving an MBMS PTM service and in the CELL_FACH state to perform GSM carrier Received Signal Strength Indicator (RSSI) measurement, GSM initial Base transceiver Station Identity Code (BSIC) identification or GSM BSIC re-authentication process of the GSM cell.

The method for determining the measurement performance requirement according to the embodiments of this invention may also be used for such a case in which the FDD UE in the state of receiving broadcast/multicast information measures an intra frequency cell, the demodulation performance requirement for the broadcast/multicast information (e.g., an MBMS PTM service or MCCH information) is considered as a whole, thus the corresponding measuring performance requirement is determined, so as to complete the identification of a new cell or report the measuring result to the higher layer within the time required by the measuring performance requirement and with the demodulation performance requirement satisfied for the received broadcast/multicast information.

The FDD UE completes the identification of the new intra frequency cell within $T_{identify,intra}$ calculated by the following formula:

$$T_{identify,intra} = Max\left\{800, Ceil\left\{\frac{T_{basic\ identify\ FDD,intra}}{T_{intra}}\right\} \cdot N_{TTI} \cdot M\_REP \cdot 10\right\} \quad \text{(Formula 21)}$$

$T_{identify,intra}$ is the identifying time determined; $T_{basic\ identify\ FDD,intra}$ = 800ms;

$T_{intra}$ Is the available intra frequency measuring time determined by the FDD UE with the demodulation performance requirement satisfied for the received MBMS.

If switching time of the receiver is considered,

$T_{intra}$ equals to the available intra frequency measuring time minus the switching time of the receiver (ms), and the available inter frequency measuring time is determined by the FDD UE with the demodulation performance requirement satisfied for the received MBMS.

The switching time of the receiver is usually determined according to the hardware ability of the receiver, and generally equals to 2*0.5ms = 1ms at present;

For other parameters, refer to the corresponding interpretation for Formula 8.

In addition, the FDD UE reports the intra frequency measuring result to the higher layer in a reporting cycle of fixed 200ms, but the number of reported cells is determined according to the following formula:

$$Y_{measurement\ intra} = Floor\left\{X_{basic\ measurement\ FDD} \cdot \frac{T_{Measurement\_Period\ Intra} - Ceil\left\{\frac{T_{Measurement\_Period\ Intra}}{N_{TTI} \cdot M\_REP \cdot 10\ ms}\right\} \cdot Tin}{T_{Measurement\_Period\ Intra}}\right\}$$

**(Formula 22)**

$Y_{measurement\ intra}$ is the number of reported cells;

$X_{basic\ measurement\ FDD} = 8$;

$T_{Measurement\_Period\ Intra}$ is the intra frequency measuring period;

$T_{in} = N_{TTI}*10$, is the available inter frequency/system measuring time determined or equals to the available inter frequency/system measuring time minus the switching time of the receiver with the demodulation performance ensured for the received MBMS.

When the method for determining the measurement performance requirement according to embodiments of this invention is performed, if UE is TDD UE, the specific process is as follows.

1) The TDD UE receives system measurement control information issued by the UTRAN, and triggers inter frequency/system measurement according to the system measurement control information.

2) The TDD UE, on the basis of ensuring the MBMS PTM service (the MBMS PTM service may be replaced by MCCH information) demodulation performance, selects a portion of the idle interval and/or the measuring time calculated according to Formula 1 as the inter frequency/system measuring time.

3) The TDD UE performs inter frequency/system measurement within the inter frequency/system measuring time selected as described above, and receives the MBMS PTM service in other time.

4) The TDD UE determines the measurement performance requirement of the inter frequency/system using the inter frequency/system measuring time.

The specific process for the TDD UE receiving an MBMS PTM service identifying a new inter TDD cell according to the aforesaid method for determining measurement performance requirement is as follows.

1) The TDD UE receives system measurement control information issued by the UTRAN, reads inter-frequency cell information indicated in the system measurement control information, and finds out an unidentified inter-frequency cell.

2) The FDD UE detects the unidentified inter-frequency cell.

3) The TDD UE performs inter frequency measurement and identifies the new inter-frequency cell in the idle interval or in a portion of the inter frequency measuring time calculated by Formula 1.

4) The TDD UE successfully identifies a new inter-frequency cell within the time calculated by the following formula.

The time necessary for 3.84Mcps TDD UE to identify a newly detected inter frequency TDD cell in the monitoring set is:

$$T_{identify\ inter} = Max\left\{5000, Ceil\left\{\frac{T_{basic\_identify\_TDD\ inter}}{T_{Inter}}\right\} \cdot T_{meas} \cdot N_{Freq,TDD}\right\} \qquad \text{(Formula 23)}$$

$T_{Inter}$ is the available inter frequency measuring time determined by the TDD UE with the demodulation performance requirement satisfied for the received MBMS; if switching time of the receiver is considered,

$T_{Inter}$ equals to the available inter frequency measuring time minus the switching time of the receiver (ms), and the available inter frequency measuring time is determined by the TDD UE with the demodulation performance requirement satisfied for the received MBMS.

The switching time of the receiver is usually determined according to the hardware ability of the receiver and generally equals to 2*0.5ms = 1ms at present.

For other parameters, refer to the corresponding interpretation in Formula 8.

The time necessary for 1.28Mcps TDD UE to identify a newly detected inter frequency TDD cell in the monitoring set is:

$$T_{identify\ inter} = Max\left\{5000, N_{basic\_identify\_TDD, inter} \cdot \frac{T_{Measurement\ Period,\ Inter}}{N_{Inter}} \cdot N_{Freq}\right\} ms$$

(Formula 24)

$N_{Inter}$ is the number of sub-frames where the signals of both DwPCH and PCCPCH of a target inter frequency TDD cell are located, and the signals may be received within the available inter frequency measuring time determined by the TDD UE based on the demodulation performance requirement satisfied for the received MBMS; if switching time of the receiver is considered,

$N_{Inter}$ equals to the number of sub-frames where the signals of both DwPCH and PCCPCH of the target inter TDD cell are located, and the signals may be received within the available inter frequency measuring time minus the switching time of the receiver. The available inter frequency measuring time is determined by the TDD UE based on the demodulation performance requirement satisfied for the received MBMS.

The switching time of the receiver is usually determined according to the hardware ability of the receiver and generally equals to 2*0.5ms = 1ms at present.

For other parameters, refer to the corresponding interpretation for Formula 9.

5) The TDD UE marks the newly identified TDD inter-frequency cell as an identified TDD inter-frequency cell in a self-stored cell information list.

In addition, the specific process for TDD UE receiving an MBMS PTM service performing PCCPCH measurement of the inter TDD cell is as follows.

1) The TDD UE receives system measurement control information or system broadcast information issued by the UTRAN, and triggers PCCPCH measurement of the inter frequency TDD cell.

2) The TDD UE selects a portion of the idle interval and/or the measuring time calculated according to Formula 1 to measure the PCCPCH of the inter frequency TDD cell.

3) The physical layer of the TDD UE reports a measuring result to the higher layer within the measurement cycle length $T_{Measurement, Inter}$ calculated by the following formula.

The physical layer of 3.84Mcps TDD UE reports the PCCPCH measuring result of the inter frequency TDD cell to the higher layer within the measurement cycle length $T_{Measurement, Inter}$ calculated by the following formula:

$$T_{measurement\ inter} = Max\left\{T_{measurement\ period\ TDD\ inter}, 2 \cdot T_{meas}, Ceil\left\{\frac{T_{basic\ measurement\ TDD\ inter}}{T_{Inter}}\right\} \cdot T_{meas} \cdot N_{Freq}\right\}$$

(Formula 25)

$T_{Inter}$ is the available inter frequency measuring time determined by the TDD UE with the demodulation performance requirement satisfied for the received MBMS. If switching time of the receiver is considered,

19

$T_{Inter}$ equals to the available inter frequency measuring time minus the switching time of the receiver (ms), and the available inter frequency measuring time is determined by the TDD UE with the demodulation performance requirement satisfied for the received MBMS.

The switching time of the receiver is usually determined according to the hardware ability of the receiver and generally equals to 2*0.5ms = 1ms at present;

For other parameters, refer to the corresponding interpretation in Formula 10.

The physical layer of 1.28Mcps TDD UE reports a PCCPCH measuring result of the inter frequency TDD cell to the higher layer within the measurement cycle length $T_{Measurement,Inter}$ calculated by the following formula:

$$T_{measurement\ inter} = Max\left\{ T_{Measurement\_Period,\ Inter}\ ,\ N_{basic\_measurement\_TDD\ inter} \cdot \frac{T_{Measurement\_Period,\ Inter}}{N_{Inter}} \cdot N_{Freq} \right\} ms$$

$$\text{(Formula 26)}$$

$N_{inter}$ is the number of sub-frames where the signals of both DwPCH and PCCPCH of the target inter frequency TDD cell are located, and the signals may be received within the available inter frequency measuring time determined by the TDD UE with the demodulation performance requirement satisfied for the received MBMS. If switching time of the receiver is considered,

$N_{inter}$ equals to the number of sub-frames where the signals of both DwPCH and PCCPCH of the target inter TDD cell are located, and the signals may be received within the available inter frequency measuring time minus the switching time of the receiver. The available inter frequency measuring time is determined by the TDD UE with the demodulation performance requirement satisfied for the received MBMS.

The switching time of the receiver is usually determined according to the hardware ability of the receiver, and generally equals to 2*0.5ms = 1ms at present.

For other parameters, refer to the corresponding interpretation in Formula 11.

4) The higher layer of the TDD UE uses the measuring result reported by the physical layer in its internal algorithm (for example, the measuring result may be taken as an input parameter of the cell re-selection algorithm) or reports the measuring result to the RNC.

The specific process for the TDD UE receiving an MBMS PTM service identifying a new WCDMA FDD cell according to the aforesaid determined measurement performance requirement is as follows.

1) The TDD UE receives system measurement control information issued by the UTRAN, reads WCDMA FDD cell information indicated in the system measurement control information, and finds out an unidentified inter-frequency cell.

2) The TDD UE detects the aforesaid unidentified WCDMA FDD cell.

3) The TDD UE performs inter system cell measurement and identifies the new inter system cell within the idle interval and/or in a portion of the inter frequency measuring time calculated by Formula 1.

4) The TDD UE successfully identifies a new inter system WCDMA FDD cell within a time calculated by the following formula.

The TDD UE receiving the MBMS PTM service identifies the detected new inter system WCDMA FDD cell belonging to the monitoring set, a new inter system WCDMA FDD cell is successfully identified within the identifying time $T_{identify\ FDD\ inter}$ calculated by the following formula.

The time necessary for 3.84Mcps TDD UE to identify a newly detected inter system WCDMA FDD cell in the monitoring set is:

$$T_{\text{identify FDD inter}} = Max\left\{5000, Ceil\left\{\frac{T_{\text{basic\_identify\_FDD inter}}}{T_{\text{Inter}}}\right\} \cdot T_{\text{meas}} \cdot N_{\text{Freq.FDD}}\right\} \quad \text{(Formula 27)}$$

$T_{\text{Inter}}$ is the available inter frequency measuring time determined by the TDD UE with the demodulation performance requirement satisfied for the received MBMS. If switching time of the receiver is considered,

$T_{\text{Inter}}$ equals to the available inter frequency measuring time minus the switching time of the receiver (ms), and the available inter frequency measuring time is determined by the TDD UE with the demodulation performance requirement satisfied for the received MBMS.

The switching time of the receiver is usually determined according to the hardware ability of the receiver, and generally equals to 2*0.5ms = 1ms at present.

For other parameters, refer to the corresponding interpretation in Formula 12.

The time necessary for 1.28Mcps TDD UE to identify a newly detected inter system WCDMA FDD cell in the monitoring set is:

$$T_{\text{identify\_FDD inter}} = Max\left\{5000, T_{\text{basic identify FDD inter}} \cdot \frac{T_{\text{Measurement\_Period FDD inter}}}{T_{\text{Inter}}} \cdot N_{\text{Freq}}\right\} ms$$

$$\text{(Formula 28)}$$

$T_{\text{Inter}}$ is the available inter frequency measuring time determined by the TDD UE with the demodulation performance requirement satisfied for the received MBMS. If switching time of the receiver is considered,

$T_{\text{Inter}}$ equals to the available inter frequency measuring time minus the switching time of the receiver (ms), and the available inter frequency measuring time is determined by the TDD UE with the demodulation performance requirement satisfied for the received MBMS.

The switching time of the receiver is usually determined according to the hardware ability of the receiver, and generally equals to 2*0.5ms = 1ms at present.

For other parameters, refer to the corresponding interpretation in Formula 13.

5) The TDD UE marks the newly identified WCDMA FDD inter-frequency cell as an identified WCDMA FDD cell in a self-stored cell information list.

In addition, the specific process for TDD UE receiving an MBMS PTM service performing CPICH measurement of the inter system WCDMA FDD cell and reporting a CPICH measuring result is as follows.

1) The TDD UE receives system measurement control information or system broadcast information issued by the UTRAN, and triggers CPICH measurement of the inter frequency WCDMA FDD cell.

2) The TDD UE selects a portion of the idle interval and/or the measuring time calculated according to Formula 1 to perform CPICH measurement of the inter system WCDMA FDD cell.

3) The physical layer of the TDD UE reports the CPICH measuring result to the higher layer within the measurement cycle length $T_{\text{Measurement,Inter}}$ calculated by the following formula.

The physical layer of 3.84Mcps TDD UE reports the CPICH measuring result of the inter system WCDMA FDD cell to the higher layer within the measurement cycle length $T_{\text{Measurement FDD,inter}}$ calculated by the following formula:

$$T_{\text{measurement FDD inter}} = Max\left\{ T_{\text{measurement period FDD inter}}, 2 \cdot T_{\text{meas}}, Ceil\left\{ \frac{T_{\text{basic\_measurement\_FDD inter}}}{T_{\text{Inter}}} \right\} \cdot T_{\text{meas}} \cdot N_{\text{Freq,FDD}} \right\}$$

(Formula 29)

$T_{\text{Inter}}$ is the available inter frequency measuring time determined by the TDD UE with the demodulation performance requirement satisfied for the received MBMS. If switching time of the receiver is considered, $T_{\text{Inter}}$ equals to the available inter frequency measuring time minus the switching time of the receiver (ms), and the available inter frequency measuring time is determined by the TDD UE with the demodulation performance requirement satisfied for the received MBMS.

The switching time of the receiver is usually determined according to the hardware ability of the receiver, and generally equals to 2*0.5ms = 1ms at present.

For other parameters, refer to the corresponding interpretation in Formula 14.

The physical layer of 1.28Mcps TDD UE reports the CPICH measuring result of the inter system WCDMA FDD cell to the higher layer within the measurement cycle length $T_{\text{Measurement FDD inter}}$ calculated by the following formula:

$$T_{\text{measurement\_FDD inter}} = Max\left\{ T_{\text{Measurement\_Period FDD inter}}, T_{\text{basic\_measurement\_FDD inter}} \cdot \frac{T_{\text{Measuremen\_Period\_FDD inter}}}{T_{\text{Inter}}} \cdot N_{\text{Freq}} \right\} ms$$

(Formula 30)

$T_{\text{Inter}}$ is the available inter frequency measuring time determined by the TDD UE with the demodulation performance requirement satisfied for the received MBMS; if switching time of the receiver is considered,

$T_{\text{Inter}}$ equals to the available inter frequency measuring time minus the switching time of the receiver (ms), and the available inter frequency measuring time is determined by the TDD UE with the demodulation performance requirement satisfied for the received MBMS.

The switching time of the receiver is usually determined according to the hardware ability of the receiver, and generally equals to 2*0.5ms = 1ms at present.

For other parameters, refer to the corresponding interpretation in Formula 15.

4) The higher layer of the TDD UE uses the measuring result reported by the physical layer in its internal algorithm (for example, the measuring result may be taken as an input parameter of the cell re-selection algorithm) or reports the measuring result to the RNC.

The method for determining measurement performance requirement according to the embodiments of this invention is also applicable to such a case in which the TDD UE in the state of receiving broadcast/multicast information measures an intra frequency cell, the demodulation performance requirement for broadcast/multicast information (e.g., an MBMS PTM service or MCCH information) is considered as a whole, thus determining corresponding measurement performance requirement so as to complete the identification of a new cell or report the measuring result to the higher layer within the time required by the measuring performance requirement and with the demodulation performance requirement satisfied for the received broadcast/multicast information.

The 1.28Mcps TDD UE completes the identification of the new intra frequency cell within the time $T_{\text{identify,intra}}$ calculated by the following formula:

$$T_{\text{identify intra}} = T_{\text{basic identify TDD,intra}} \cdot \frac{N_{\text{Period,Intra}}}{N_{\text{Intra}}}$$

(Formula 31)

$T_{\text{basic identify TDD, intra}}$ = 800ms;

$N_{\text{period,intra}}$ = 40ms;

$N_{\text{intra}}$ is the number of sub-frames where the signals of both DwPCH and PCCPCH of a target inter frequency TDD cell are located, and the signals may be received within the available intra frequency measuring time determined based on the demodulation performance requirement satisfied for the received MBMS.

In addition, the 1.28Mcps TDD UE reports the intra frequency measuring result to the higher layer in a reporting cycle of fixed 200ms, but the number of reported cells performed PCCPCH measurement is determined according to the following formula:

$$Y_{\text{measuremen intra}} = \text{Floor}\left\{ X_{\text{basic measuremen TDD}} \cdot \frac{N_{\text{Intra}}}{N_{\text{Period,Intra}}} \right\}$$

(Formula 32)

$X_{\text{basic measurement TDD}}$ = 8; for the other parameters, refer to the corresponding interpretations in the aforesaid and in Formula 31.

The specific process for TDD UE receiving an MBMS PTM service performing measurement of the GSM cell according to the aforesaid determined measurement performance requirement is as follows.

1) The TDD UE receives system measurement control information issued by the UTRAN, reads GSM cell information indicated in the system measurement control information, and finds out an unidentified inter system GSM cell or needs to measure the received signals of the identified inter system GSM cell.

2) The TDD UE detects the unidentified inter system GSM cell or measures the received signals of the identified inter system GSM cell.

3) The TDD UE selects a portion of the idle interval and/or the measuring time calculated according to Formula 1 to measure an inter system GSM cell so as to identify the unidentified inter system GSM cell detected in the aforesaid step 2) or measure the received signals of the identified inter system GSM cell, and the specific measuring time selected is a portion of the available inter frequency measuring time determined based on the demodulation performance ensured for the received MBMS; if there is a switching process of the receiver, the determined measuring time is the determined available inter frequency measuring time minus the switching time of the receiver. The switching time of the receiver is determined according to the hardware ability of the receiver, and generally equals to 1 ms.

4) The TDD UE marks the aforesaid successfully identified inter system GSM cell as an identified inter-frequency cell in a self-stored cell information list, or reports the quality of the measured received signals of the identified inter system GSM cell.

The above process is applicable to TDD UE receiving an MBMS PTM service to perform GSM carrier Received Signal Strength Indicator (RSSI) measurement, GSM initial Base transceiver Station Identity Code (BSIC) identification or GSM BSIC re-authentication of the GSM cell.

In the embodiments mentioned above, various formulas or equations are merely examples, which should not unduly limit the scope of the claims. One of ordinary skill in the art would recognize many variations, alternatives and modifications.

Obviously, those skilled in the art may make numerous changes and variations on the solution of this invention without departing from the scope thereof. Accordingly, it is intended that this invention includes the changes and variations in case that such changes and variations come within the scope as set forth in the appended claims.

## Claims

1.  An inter-frequency/-system measurement method for User Equipment, UE, receiving a Multimedia Broadcast/Multicast Service MBMS, the UE being capable of using an inter-frequency/-system measuring time to measure an inter-frequency/-system cell continuously, **characterized in**, the method comprising:

    selecting one portion of the inter-frequency/-system measuring time as an available inter-frequency/-system measuring time to perform an inter-frequency/-system measurement of an inter-frequency/-system cell to satisfy a required demodulation performance of received MBMS in the other portion;
    receiving MBMS in the other portion of the inter-frequency/-system measuring time; and
    determining identifying time of the inter-frequency/-system cell and report time of result of the measurement based on the available inter-frequency/-system measuring time to satisfy a measurement performance requirement for the inter-frequency/-system cell.

2.  The method of claim 1, wherein the portion of inter-frequency/-system measuring time is a portion of the measurement occasion cycle length of $N_{TTI}$ frames which corresponds to a portion of the MBMS Transmission Timing Interval, TTI, length, said $N_{TTI}$ is the TTI in number of 10ms frames on a selected Secondary Common Control Physical Channel, SCCPCH, and Forward Access Channels, FACHs, that only carry MBMS logical channels are excluded from measurement occasion calculations.

3.  The method of claim 2, wherein the portion of the MBMS TTI length is 25% of the MBMS TTI length at the maximum.

4.  The method of Claim 2 or 3, wherein the inter-frequency/-system measuring time comprises at least one of: an idle interval for Time Division Duplex UE, TDD UE, and a measuring time for the TDD UE in a CELL_FACH state during which a frame has a System Frame Number, SFN, fulfilling the following formula:

$$SFN = [C\_RNTI \bmod M\_REP + n*M\_REP]*N;$$

    the TDD UE performs the inter-frequency/-system measurement in one frame having the SFN calculated by the formula; where
    N is the TTI in number of 10ms frames of the FACH having the largest TTI on the SCCPCH selected by the TDD UE, and the FACHs that only carry MBMS logical channels are excluded from the measurement occasion calculations;
    C_RNTI is a Cell Radio Network Temporary Identity RNTI, C_RNTI, value of the TDD UE;
    M_REP is a measurement occasion cycle length; and
    n = 0, 1,2... as long as the SFN is below the maximum value of n.

5.  The method of claim 2 or 3, wherein the inter-frequency/-system measuring time is a measuring time for Frequency Division Duplex UE, FDD UE, in a CELL_FACH state during which a frame has an SFN fulfilling the following formula:

$$SFN = [C\_RNTI \bmod M\_REP + n*M\_REP]*N;$$

    the FDD UE performs the inter-frequency/-system measurement in one frame having the SFN calculated by the formula; where
    N is the TTI in number of 10ms frames of the FACH having the largest TTI on the SCCPCH selected by the FDD UE, and the FACHs that only carry MBMS logical channels are excluded from the measurement occasion calculations;
    C_RNTI is a C_RNTI value of the FDD UE;
    M_REP is a measurement occasion cycle length; and

n = 0, 1, 2... as long as SFN is below the maximum value of n.

**6.** The method of Claim 1, wherein said identifying time is determined according to the available inter-frequency/-system measuring time, or according to a given time equaling to the available inter-frequency/-system measuring time minus switching time of a receiver.

**7.** The method of claim 1, wherein said identifying time is determined according to the number of frames or sub-frames containing received broadcast signals of a target cell and/or pilot signals, within the available inter-frequency/-system measuring time or within a given time equaling to the available inter-frequency/-system measuring time minus switching time of a receiver.

**8.** The method of claim 1, wherein said reporting time is determined according to the available inter-frequency/-system measuring time, or according to a given time equaling to the available inter-frequency/-system measuring time minus switching time of a receiver.

**9.** The method of claim 1, wherein said reporting time is determined according to the number of frames or sub-frames containing received broadcast signals of a target cell and/or pilot signals, within the available inter-frequency/-system measuring time or within a given time equaling to the available inter-frequency/-system measuring time minus switching time of a receiver.

**10.** The method of claim 6, wherein the UE is Frequency Division Duplex UE, FDD UE, the new cell is an inter-frequency cell of the FDD UE, and the identifying time determined by the FDD UE is calculated by the following formula:

$$T_{identify,\ inter} = Ceil\left\{ \frac{T_{basic\_identify\_F\ DD,inter}}{T_{Inter}} \right\} \cdot T_{meas} \cdot N_{Freq,FDD} \quad ,$$

where $T_{identify,inter}$ represents an identifying time for the FDD UE identifying an inter-frequency cell;
$T_{basic\_identify\_FDD,inter}$ = 300ms, is a maximum time allowed to identify a new inter-frequency cell for the FDD UE;
$N_{Freq,FDD}$ is the number of FDD frequencies indicated in an information list of inter-frequency cells in system measurement control information issued by an access network;

$$T_{meas} = \left[ (N_{FDD} + N_{TDD} + N_{GSM}) \cdot N_{TTI} \cdot M\_REP \cdot 10 \right]_,$$

where $N_{TTI}$ is the TTI in number of 10ms frames of the FACH having the largest TTI on the SCCPCH selected by the FDD UE, and FACHs that only carry MBMS logical channels are excluded from measurement occasion calculations;
M_REP is a measurement occasion cycle length, and M_REP = $2^k$, where k is a FACH measurement occasion cycle length coefficient;
$N_{FDD}$ equals to 0 or 1; if there is an FDD inter-frequency cell in an information list of adjacent cells, $N_{FDD}$ = 1; otherwise, $N_{FDD}$ = 0;
$N_{TDD}$ equals to 0 or 1; if there is a TDD inter-frequency cell in the information list of adjacent cells, $N_{TDD}$ = 1; otherwise, $N_{TDD}$ = 0;
$N_{GSM}$ equals to 0 or 1; if there is a GSM inter-frequency cell in the information list of adjacent cells, $N_{GSM}$ = 1; otherwise, $N_{GSM}$ = 0;
$T_{Inter}$ is an available inter-frequency measuring time determined by the FDD UE with the required demodulation performance ensured for the received MBMS; if switching time of a receiver is considered, $T_{Inter}$ equals to the available inter-frequency measuring time minus the switching time of the receiver.

**11.** The method of claim 8, wherein the UE is FDD UE, and the new cell is an inter-frequency cell of the FDD UE, and the reporting time determined by the FDD UE is calculated by following formula:

$$T_{measurement\ inter} = Max\left\{ T_{Measurement\_Period,\ Inter}, 2 \cdot T_{meas}, Ceil\left\{ \frac{T_{basic\_measurement\_FDD,\ inter}}{T_{Inter}} \right\} \cdot T_{meas} \cdot N_{Freq,FDD} \right\}$$

$T_{basic\_measurement\_FDD,inter}$ = 50ms;
$T_{Measurement\_Period,\ Inter}$ = 480ms;
$N_{Freq,FDD}$ is the number of FDD frequencies indicated in an information list of inter-frequency cells in system measurement control information issued by an access network;

$$T_{meas} = \left[ (N_{FDD} + N_{TDD} + N_{GSM}) \cdot N_{TTI} \cdot M\_REP \cdot 10 \right] ,$$

where

$N_{TTI}$ is the TTI in number of 10ms frames of the FACH having the largest TTI on the SCCPCH selected by the FDD UE, and FACHs that only carry MBMS logical channels are excluded from measurement occasion calculations;
M_REP is a measurement occasion cycle length, and M_REP = $2^k$, where k is a FACH measurement occasion cycle length coefficient;
$N_{FDD}$ equals to 0 or 1; if there is an FDD inter-frequency cell in an information list of adjacent cells, $N_{FDD}$ = 1; otherwise, $N_{FDD}$ = 0;
$N_{TDD}$ equals to 0 or 1; if there is a TDD inter-frequency cell in the information list of adjacent cells, $N_{TDD}$ =1; otherwise, $N_{TDD}$ = 0;
$N_{GSM}$ equals to 0 or 1; if there is a GSM inter-frequency cell in the information list of adjacent cell, $N_{GSM}$ = 1; otherwise, $N_{GSM}$ = 0;
$T_{Inter}$ is an available inter-frequency measuring time determined by the FDD UE with the required demodulation performance ensured for the received MBMS, or a given time equaling to the available inter-frequency measuring time minus switching time of a receiver.

12. The method of claim 6, wherein the UE is FDD UE, the new cell is an inter system WCDMA TDD cell, and the identifying time determined by the FDD UE is determined by the following formula:

$$T_{identify,\ TDD} = Max\left\{ 5000, Ceil\left\{ \frac{T_{basic\_identify\_TDD,inter}}{T_{Inter}} \right\} \cdot T_{meas} \cdot N_{Freq,TDD} \right\} ,$$

where

$T_{basic\_identify\_TDD,inter}$ is a maximum time allowed to identify a new WCDMA TDD cell for the FDD UE;
$N_{Freq,TDD}$ is the number of TDD frequencies indicated in an information list of the inter-frequency cells in system measurement control information issued by an access network;

$$T_{meas} = \left[ (N_{FDD} + N_{TDD} + N_{GSM}) \cdot N_{TTI} \cdot M\_REP \cdot 10 \right] ,$$

where

$N_{TTI}$ is the TTI (in number of 10ms frames) of the FACH having the largest TTI on the SCCPCH selected by the FDD UE, and FACHs that only carry MBMS logical channels are excluded from measurement occasion calculations;
M_REP is a measurement occasion cycle length, and M_REP = $2^k$, where k is a FACH measurement occasion cycle length coefficient;
$N_{FDD}$ equals to 0 or 1; if there is an FDD inter-frequency cell in an information list of adjacent cells, $N_{FDD}$ = 1;

otherwise, $N_{FDD} = 0$;

$N_{TDD}$ equals to 0 or 1; if there is a TDD inter-frequency cell in the information list of adjacent cells, $N_{TDD} = 1$; otherwise, $N_{TDD} = 0$;

$N_{GSM}$ equals to 0 or 1; if there is a GSM inter-frequency cell in the information list of adjacent cells, $N_{GSM} = 1$; otherwise, $N_{GSM} = 0$;

$T_{Inter}$ is an available inter system measuring time determined by the FDD UE with the required demodulation performance ensured for the received MBMS, or a given time equaling to the available inter system measuring time minus switching time of a receiver.

**13.** The method of claim 8, wherein the UE is FDD UE, the new cell is an inter system WCDMA TDD cell, and the reporting time determined by the FDD UE is calculated by the following formula:

$$T_{measurement,\ TDD} = Max\left\{T_{Measurement\_Period\_TDD,\ inter}, 2 \cdot T_{meas}, Ceil\left\{\frac{T_{basic\_measurement\_TDD,inter}}{T_{Inter}}\right\} \cdot T_{meas} \cdot \dot{N}_{Freq,TDD}\right\} ,$$

where

$T_{basic\_measurement\_TDD,inter} = 50mS$;
$T_{Measurement\_Period\_TDD,inter} = 480ms$;

$$T_{meas} = \left[\left[N_{FDD} + N_{TDD} + N_{GSM}\right] \cdot N_{TTI} \cdot M\_REP \cdot 10\right],$$

where

$N_{TTI}$ is the TTI in number of 10ms frames of the FACH having the largest TTI on the SCCPCH selected by the FDD UE, and FACHs that only carry MBMS logical channels are excluded from measurement occasion calculations;

$M\_REP$ is a measurement occasion cycle length, and $M\_REP = 2^k$, where k is a FACH measurement occasion cycle length coefficient;

$N_{FDD}$ equals to 0 or 1; if there is a FDD inter-frequency cell in an information list of adjacent cells, $N_{FDD} = 1$; otherwise, $NFDD = 0$;

$N_{TDD}$ equals to 0 or 1; if there is a TDD inter-frequency cell in the information list of adjacent cells, $N_{TDD} = 1$; otherwise, $N_{TDD} = 0$;

$N_{GSM}$ equals to 0 or 1; if there is a GSM inter-frequency cell in the information list of adjacent cells, $N_{GSM} = 1$; otherwise, $N_{GSM} = 0$;

$N_{Freq,TDD}$ is the number of TDD frequencies indicated in an information list of inter-frequency cells in system measurement control information issued by a Universal Terrestrial Radio Access Network, UTRAN;

$T_{Inter}$ is an available inter system measuring time determined by the FDD UE with the required demodulation performance ensured for the received MBMS, or a given time equaling to the available inter system measuring time minus switching time of a receiver.

**14.** The method of claim 6, wherein the UE is FDD UE, and the new cell is an intra frequency cell of the FDD UE, and the identifying time determined by the FDD UE is determined by the following formula:

$$T_{identify,\ intra} = Max\left\{800, Ceil\left\{\frac{T_{basic\ identify\ FDD,\ intra}}{T_{intra}}\right\} \cdot N_{TTI} \cdot M\_REP \cdot 10\right\} ,$$

where

$T_{basic\ identify\ FDD,\ intra} = 800ms$;
$N_{TTI}$ is the TTI in number of 10ms frames of the FACH having the largest TTI on the SCCPCH selected by the FDD UE, and FACHs that only carry MBMS logical channels are excluded from measurement occasion calculations;

M_REP is a measurement occasion cycle length, and M_REP = $2^k$, where k is a FACH measurement occasion cycle length coefficient;

$T_{int\,ra}$ is an available intra frequency measuring time determined by the FDD UE with the required demodulation performance ensured for the received MBMS, or a given time equaling to the available intra frequency measuring time minus switching time of a receive.

15. The method of claim 1, wherein the measurement performance requirement further comprises the number of reported cells, the UE is FDD UE, the new cell is an intra frequency cell of the FDD UE, the reporting time determined by the FDD UE is 200ms, and the number of reported cells is calculated by the following formula:

$$Y_{measurement\ intra} = Floor\left\{ X_{basic\ measurement\ FDD} \cdot \frac{T_{Measurement\_Period\ Intra} - Ceil\left\{\dfrac{T_{Measurement\_Period\ Intra}}{N_{TTI} \cdot M\_REP \cdot 10\ ms}\right\} \cdot Tin}{T_{Measurement\_Period\ Intra}} \right\},$$

where

$X_{basic\ measurement\ FDD}$ = 8;

$T_{Measurement\ Period\ Intra}$ is an intra frequency measuring period;

$T_{in} = N_{TTI}*10$, is an available inter-frequency/-system measuring time determined by the FDD UE with the required demodulation performance ensured for the received MBMS, or a given time equaling to the available inter-frequency/-system measuring time minus switching time of a receiver.

16. The method of claim 6, wherein the UE is 3.84Mcps TDD UE, the new cell is an inter-frequency TDD cell of the TDD UE, and the identifying time determined by the UE is determined by the following formula:

$$T_{identify\ inter} = Max\left\{ 5000, Ceil\left\{\frac{T_{basic\_identify\_TDD\ inter}}{T_{Inter}}\right\} \cdot T_{meas} \cdot N_{Freq,TDD} \right\},$$

where

$T_{basic\_identify\_TDD,inter}$ is a maximum time allowed to identify an inter-frequency cell for the TDD UE;

$N_{Freq,\ TDD}$ is the number of TDD frequencies indicated in an information list of inter-frequency cells in system measurement control information issued by an access network;

$$T_{meas} = \left[ \left( N_{FDD} + N_{TDD} + N_{GSM} \right) \cdot N_{TTI} \cdot M\_REP \cdot 10 \right],$$

where

$N_{TTI}$ is the TTI in number of 10ms frames of the FACH having the largest TTI on the SCCPCH selected by the UE, and FACHs that only carry MBMS logical channels are excluded from measurement occasion calculations;

M_REP is a measurement occasion cycle length, and M_REP = $2^k$, where k is a FACH measurement occasion cycle length coefficient;

$N_{FDD}$ equals to 0 or 1; if there is an FDD inter-frequency cell in an information list of adjacent cells, $N_{FDD}$ = 1; otherwise, $N_{FDD}$ =0;

$N_{TDD}$ equals to 0 or 1; if there is a TDD inter-frequency cell in the information list of adjacent cells, $N_{TDD}$ = 1; otherwise, $N_{TDD}$ = 0;

$N_{GSM}$ equals to 0 or 1; if there is a GSM inter-frequency cell in the information list of adjacent cells, $N_{GSM}$ = 1; otherwise, $N_{GSM}$ = 0;

$T_{Inter}$ is an available inter-frequency measuring time determined by the TDD UE with the required demodulation performance ensured for the received MBMS, or a given time equaling to the available inter-frequency measuring time minus switching time of a receiver.

**17.** The method of claim 7, wherein the UE is 1.28Mcps TDD UE, the new cell is an inter-frequency cell of the TDD UE, and the identifying time determined by the UE is determined by the following formula:

$$T_{\text{identify inter}} = Max\left\{5000, N_{\text{basic\_identify\_TDD,inter}} \cdot \frac{T_{\text{Measurement Period, Inter}}}{N_{\text{Inter}}} \cdot N_{Freq}\right\},$$

where

$T_{\text{basic-identify\_MD,inter}}$ is a maximum time allowed to identify an inter-frequency cell for the TDD UE;
$T_{\text{Measurement\_Period Inter}}$=480ms;
$N_{Freq}$ is the number of TDD frequencies indicated in an information list of inter-frequency cells in system measurement control information indicated by a UTRAN;
$N_{Inter}$ is the number of sub-frames where signals of both DwPCH and PCCPCH of a target inter-frequency TDD cell are located, and the signals is received within the available inter-frequency measuring time determined by the TDD UE based on the required demodulation performance ensured for the received MBMS, or is the number of sub-frames where signals of both DwPCH and PCCPCH of a target inter-frequency TDD cell are located, and the signals is received within a given time equaling to the available inter-frequency measuring time minus switching time of a receiver.

**18.** The method of claim 8, wherein the UE is 3.84Mcps TDD UE, the cell is an inter-frequency cell of the TDD UE, and the reporting time determined by the UE is calculated by following formula:

$$T_{\text{measurement inter}} = Max\left\{T_{\text{measurement period TDD inter}}, 2 \cdot T_{\text{meas}}, Ceil\left\{\frac{T_{\text{basic measurement TDD inter}}}{T_{\text{Inter}}}\right\} \cdot T_{\text{meas}} \cdot N_{Freq}\right\},$$

where

$T_{\text{basic measurement TDD,inter}}$ = 50ms;
$T_{\text{Measurement Period TDD Inter}}$ = 480ms;
$N_{Freq}$ is the number of TDD frequencies indicated in an information list of inter-frequency cells in system measurement control information indicated by a UTRAN;

$$T_{\text{meas}} = \left[\left(N_{FDD} + N_{TDD} + N_{GSM}\right) \cdot N_{TTI} \cdot M\_REP \cdot 10\right],$$

where

$N_{TTI}$ is the TTI in number of 10ms frames of the FACH having the largest TTI on the SCCPCH selected by the UE, and FACHs that only carry MBMS logical channels are excluded from measurement occasion calculations;
$M\_REP$ is a measurement occasion cycle length, and $M\_REP = 2^k$, where k is a FACH measurement occasion cycle length coefficient;
$N_{FDD}$ equals to 0 or 1; if there is an FDD inter-frequency cell in an information list of adjacent cells, $N_{FDD} = 1$; otherwise, $N_{FDD} = 0$;
$N_{TDD}$ equals to 0 or 1; if there is a TDD inter-frequency cell in the information list of adjacent cells, $N_{TDD} = 1$; otherwise, $N_{TDD} = 0$;
$N_{GSM}$ equals to 0 or 1; if there is a GSM inter-frequency cell in the information list of adjacent cells, $N_{GSM} = 1$; otherwise, $N_{GSM} = 0$;
$T_{Inter}$ is an available inter-frequency measuring time determined by the TDD UE with the required demodulation performance ensured for the received MBMS, or the available inter-frequency measuring time minus switching time of a receiver.

19. The method of clam 9, wherein the UE is 1.28Mcps TDD UE, the cell is an inter-frequency cell of the TDD UE, and the reporting time determined by the TDD UE is calculated by following formula:

$$T_{measurement\ inter} = Max\left\{T_{Measurement\_Period,\ Inter}, N_{basic\_measurement\_TDD\ inter} \cdot \frac{T_{Measurement\_Period,\ Inter}}{N_{Inter}} \cdot N_{Freq}\right\}ms,$$

where

$T_{Measurement\_Period\ Inter}$=480ms;
$T_{basic\_measurement\_TDD\ inter}$=50ms;
$N_{Freq}$ is the number of TDD frequencies indicated in an information list of inter-frequency cells in system measurement control information indicated by a UTRAN;
$N_{Inter}$ is the number of sub-frames where signals of both DwPCH and PCCPCH of a target inter-frequency TDD cell are located, and the signals is received within an available inter-frequency measuring time determined by the TDD UE with the required demodulation performance ensured for the received MBMS, or the number of the sub-frames where signals of both DwPCH and PCCPCH of a target inter-frequency TDD cell are located, and the signals is received within a given time equaling to the available inter-frequency measuring time minus switching time of a receiver.

20. The method of claim 6, wherein the UE is 3.84Mcps TDD UE, the new cell is a WCDMA TDD cell, and the identifying time determined by the TDD UE is determined by the following formula:

$$T_{identify\ FDD\ inter} = Max\left\{5000, Ceil\left\{\frac{T_{basic\_identify\_FDD\ inter}}{T_{Inter}}\right\} \cdot T_{meas} \cdot N_{Freq,FDD}\right\},$$

where

$T_{basic\_identify\_FDD,inter}$ = 800ms, is a maximum time allowed to identify a new WCDMA TDD cell for the TDD UE;

$$T_{meas} = \left[\left(N_{FDD} + N_{TDD} + N_{GSM}\right) \cdot N_{TTI} \cdot M\_REP \cdot 10\right],$$

where

$N_{TTI}$ is the TTI in number of 10ms frames of the FACH having the largest TTI on the SCCPCH selected by the UE, and FACHs that only carry MBMS logical channels are excluded from measurement occasion calculations;
M_REP is a measurement occasion cycle length, and M_REP = $2^k$, where k is a FACH measurement occasion cycle length coefficient;
NFDD equals to 0 or 1; if there is an FDD inter-frequency cell in an information list of adjacent cells, $N_{FDD}$ = 1; otherwise, $N_{FDD}$ = 0;
$N_{TDD}$ equals to 0 or 1; if there is a TDD inter-frequency cell in the information list of adjacent cells, $N_{TDD}$ = 1; otherwise, $N_{TDD}$ = 0;
$N_{GSM}$ equals to 0 or 1; if there is a GSM inter-frequency cell in the information list of adjacent cells, $N_{GSM}$ = 1; otherwise, $N_{GSM}$ = 0;
$N_{Freq,FDD}$ is the number of FDD frequencies indicated in an information list of inter-frequency cells in system measurement control information indicated by a UTRAN;
$T_{Inter}$ is an available inter-frequency measuring time determined by the TDD UE with the required demodulation performance ensured for the received MBMS, or a given time equaling to the available inter-frequency measuring time minus switching time of a receiver.

21. The method of claim 6, wherein the UE is 1.28Mcps TDD UE, the new cell is a WCDMA FDD cell, and the identifying time determined by the UE is determined by the following formula:

$$T_{\text{identify\_FDD inter}} = Max\left\{5000, T_{\text{basic identify FDD inter}} \cdot \frac{T_{\text{Measurement\_Period FDD inter}}}{T_{\text{Inter}}} \cdot N_{Freq}\right\}ms \ ,$$

where

$T_{\text{basic\_identify\_FDD,inter}}$ = 800ms, is a maximum time allowed to identify a new FDD cell for the TDD UE;

$T_{\text{Measurement\_Period FDD inter}}$ = 480ms;

$N_{\text{Freq}}$, is the number of FDD frequencies indicated in an information list of inter-frequency cells in system measurement control information indicated by a UTRAN;

$T_{\text{Inter}}$ is an available inter-frequency measuring time determined by the TDD UE with the required demodulation performance ensured for the received MBMS, or a given time equaling to the available inter-frequency measuring time minus switching time of a receiver.

22. The method of claim 8, wherein the UE is 3.84Mcps TDD UE, the new cell is an inter system WCDMA TDD cell, and the reporting time determined by the TDD UE is calculated by the following formula:

$$T_{\text{measurement FDD inter}} = Max\left\{T_{\text{measurement period FDD inter}}, 2 \cdot T_{\text{meas}}, Ceil\left\{\frac{T_{\text{basic\_measurement\_FDD inter}}}{T_{\text{Inter}}}\right\} \cdot T_{\text{meas}} \cdot N_{Freq,FDD}\right\} \ ,$$

where

$T_{\text{basic\_measurement\_FDD inter}}$ = 50ms;

$T_{\text{Measurement\_Period FDD inter}}$ = 480ms;

$N_{\text{Freq,TDD}}$ is the number of TDD frequencies indicated in an information list of inter-frequency cells in system measurement control information issued by an access network;

$$T_{meas} = \left[\left(N_{FDD} + N_{TDD} + N_{GSM}\right) \cdot N_{TTI} \cdot M\_REP \cdot 10\right]$$

$N_{\text{TTI}}$ is the TTI in number of 10ms frames of the FACH having the largest TTI on the SCCPCH selected by the UE, and FACHs that only carry MBMS logical channels are excluded from the measurement occasion calculations;

M_REP is a measurement occasion cycle length, and M_REP = $2^k$, where k is a FACH measurement occasion cycle length coefficient;

$N_{\text{FDD}}$ equals to 0 or 1; if there is an FDD inter-frequency cell in an information list of adjacent cells, $N_{\text{FDD}}$ = 1; otherwise, $N_{\text{FDD}}$ = 0;

$N_{\text{TDD}}$ equals to 0 or 1; if there is a TDD inter-frequency cell in the information list of adjacent cells, $N_{\text{TDD}}$ = 1; otherwise, $N_{\text{TDD}}$ = 0;

$N_{\text{GSM}}$ equals to 0 or 1; if there is a GSM inter-frequency cell in the information list of adjacent cells, $N_{\text{GSM}}$ = 1; otherwise, $N_{\text{GSM}}$ = 0;

$T_{\text{Inter}}$ is an available inter-frequency measuring time determined by the TDD UE with the required demodulation performance ensured for the received MBMS, or a given time equaling to the available inter-frequency measuring time minus switching time of a receiver.

23. The method of claim 8, wherein the UE is 1.28Mcps TDD UE, the new cell is an inter system WCDMA TDD cell, and the reporting time determined by the TDD UE is calculated by the following formula:

$$T_{measurement\_FDDinter} = Max\left\{ T_{Measuremen\_Period\,FDD\,inter} , T_{basic\_measuremen\_FDD\,inter} \cdot \frac{T_{Measuremen\_Period\_FDD\,inter}}{T_{Inter}} \cdot N_{Freq} \right\} ms ,$$

where

$T_{Measurement\_Period\,FDD\,inter}$ = 480ms;
$T_{basic\_measurement\_FDD\,inter}$ = 50ms;
$N_{Freq}$ is the number of TDD frequencies indicated in an information list of inter-frequency cells in system measurement control information indicated by a UTRAN;
$T_{Inter}$ is an available inter-frequency measuring time determined by the TDD UE with the required demodulation performance ensured for the received MBMS, or a given time equaling to the available inter-frequency measuring time minus switching time of a receiver.

24. The method of claim 9, wherein the UE is TDD UE, and the new cell is an intra frequency cell of the TDD UE, and the identifying time determined by the TDD UE is determined by the following formula:

$$T_{identify\,intra} = T_{basic\,identify\,TDD,intra} \cdot \frac{N_{Period,Intra}}{N_{Intra}} ,$$

where

$T_{basic\,identify\,TDD,\,intra}$ = 800ms;
$N_{period,intra}$ = 40ms;
$N_{intra}$ is the number of sub-frames where signals of both DwPCH and PCCPCH of a target inter-frequency TDD cell are located, and the signals are received within an available intra frequency measuring time determined with the required demodulation performance ensured for the received MBMS.

25. The method of claim 1, wherein the measurement performance requirement further comprises the number of reported cells, the UE is TDD UE, the new cell is an intra frequency cell of the TDD UE, the reporting time determined by the UE is 200ms, and the number of reported cells is calculated by the following formula:

$$Y_{measuremen\,intra} = Floor\left\{ X_{basic\,measuremen\,TDD} \cdot \frac{N_{Intra}}{N_{Period,Intra}} \right\} ,$$

where

$X_{basic\,measurement\,TDD}$ = 8;
$N_{period,intra}$ = 40ms;
$N_{intra}$ is the number of sub-frames where signals of both DwPCH and PCCPCH of a target inter-frequency TDD cell are located, and the signals are received within an available intra frequency measuring time determined with the required demodulation performance ensured for the received MBMS.

26. The method of claim 6,8 or 15, wherein the inter frequency measuring time is not higher than 25% of the TTI of a Multimedia Broadcast/Multicast Point-to-multipoint Service Channel (MTCH).

27. The method of any of claims 6 to 23, or 26, wherein the switching time of the receiver is determined by the hardware ability of the receiver and a prevailing value of the receiver is 1 ms.

28. The method of claim 1, wherein the MBMS comprises at least one of:

multimedia broadcast/multicast point-to-multipoint service information and multimedia broadcast/multicast point-to-multipoint control information.

**29.** An apparatus for receiving a Multimedia Broadcast/Multicast Service MBMS by UE, the UE being capable of using an inter-frequency/-system measuring time to measure an inter-frequency/-system cell continuously, **characterized in**, the apparatus comprising:

   selecting means, adapted to select one portion of the inter-frequency/-system measuring time as an available inter-frequency/-system measuring time to perform an inter-frequency/-system measurement of an inter-frequency/-system cell to satisfy a required demodulation performance of received MBMS in the other portion;
   receiving means, adapted to receive MBMS in the other portion of the inter-frequency/-system measuring time; and
   determining means, adapted to determine identifying time of the inter-frequency/-system cell and report time of result of the measurement based on the available inter-frequency/-system measuring time to satisfy a measurement performance requirement for the inter-frequency/-system cell.

**30.** The apparatus of claim 29, wherein the available inter-frequency/-system measuring time is a portion of the Measurement Occasion cycle length of $N_{TTI}$ frames which corresponds to a portion of the MBMS Transmission Timing Interval, TTI, length, said $N_{TTI}$ is the TTI in number of 10ms frames of the FACH having the largest TTI on a selected Secondary Common Control Physical Channel, SCCPCH, and Forward Access Channels, FACHs, that only carry MBMS logical channels are excluded from measurement occasion, calculations.

**31.** The apparatus of claim 30, wherein the portion of the MBMS TTI length is 25% of the MBMS TTI length at the maximum.

**Patentansprüche**

**1.** Verfahren zur Inter-Frequenz-/-System-Messung für ein Benutzergerät, UE, welches einen Multimedia Broadcast/Multicast-Dienst, MBMS, empfängt, wobei das UE in der Lage ist, eine Inter-Frequenz-/-System-Messzeit zu verwenden, um kontinuierlich eine Inter-Frequenz-/-System-Zelle zu messen, **dadurch gekennzeichnet, dass** das Verfahren umfasst:

   Auswählen eines Anteils der Inter-Frequenz-/-System-Messzeit als eine verfügbare Inter-Frequenz-/-System-Messzeit, um eine Inter-Frequenz-/-System-Messung einer Inter-Frequenz-/-System-Zelle durchzuführen, um einer erforderlichen Demodulierungsgüte des empfangenen MBMS in dem anderen Anteil zu genügen;
   Empfangen des MBMS in dem anderen Anteil der Inter-Frequenz-/-System-Messzeit; und
   Bestimmen einer Identifizierungszeit der Inter-Frequenz-/-System-Zelle und einer Meldezeit eines Ergebnisses der Messung, basierend auf der verfügbaren Inter-Frequenz-/-System-Messzeit, um einer Anforderung an die Ausführung der Messung für die Inter-Frequenz-/-System-Zelle zu genügen.

**2.** Verfahren nach Anspruch 1, wobei der Anteil der Inter-Frequenz-/-System-Messzeit ein Anteil der Zykluslänge des Messereignisses von $N_{TTI}$-Frames ist, die einem Anteil der Übertragungszeitintervall-Länge, TTI-Länge, des MBMS entspricht, wobei $N_{TTI}$ das TTI als eine Anzahl von Frames mit 10 ms auf einem ausgewählten Secondary-Common-Control-Physical-Channel, SCCPCH, ist, und Forward-Access-Channels, FACHs, die nur logische Kanäle des MBMS tragen, von den Messereignis-Berechnungen ausgeschlossen sind.

**3.** Verfahren nach Anspruch 2, wobei der Anteil der MBMS-TTI-Länge bei 25 % der maximalen MBMS-TTI-Länge liegt.

**4.** Verfahren nach Anspruch 2 oder 3, wobei die Inter-Frequenz-/-System-Messzeit zumindest eines der folgenden umfasst: ein Leerintervall für ein Time-Division-Duplex UE, TDD UE, und eine Messzeit für das TDD UE in einem CELL_FACH-Status, während der ein Frame eine System-Frame-Nummer, SFN, aufweist, die die folgende Formel erfüllt:

$$SFN = [C\_RNTI \bmod M\_REP + n*M\_REP]*N;$$

wobei das TDD UE die Inter-Frequenz-/-System-Messung in einem Frame mit der SFN durchführt, die durch die Formel berechnet wird; worin

N das TTI als eine Anzahl von Frames mit 10 ms des FACH mit dem größten TTI auf dem SCCPCH ist, der von dem TDD UE ausgewählt wird, und die FACHs, die nur die logischen Kanäle des MBMS tragen, von den Messereignis-Berechnungen ausgeschlossen sind;

C_RNTI ein temporärer Identitätswert eines Mobilfunknetzes, C_RNTI-Wert, des TDD UE ist;

M_REP eine Zykluslänge eines Messereignisses ist; und

n = 0, 1, 2..., solange die SFN niedriger als der maximale Wert von n ist.

5. Verfahren nach Anspruch 2 oder 3, wobei die Inter-Frequenz-/-System-Messzeit eine Messzeit für ein Frequency-Division-Duplex UE, FDD UE, in einem CELL_FACH-Status ist, während der ein Frame eine SFN aufweist, die die folgende Formel erfüllt:

$$SFN = [C\_RNTI \bmod M\_REP + n*M\_REP]*N;$$

wobei das FDD UE die Inter-Frequenz-/-System-Messung in einem Frame mit der SFN durchführt, die durch die Formel berechnet wird; worin

N das TTI als eine Anzahl von Frames mit 10 ms des FACH mit dem größten TTI auf dem SCCPCH ist, der von dem FDD UE ausgewählt wird, und die FACHs, die nur die logischen Kanäle des MBMS tragen, von den Messereignis-Berechnungen ausgeschlossen sind;

C_RNTI ein C_RNTI-Wert des FDD UE ist;

M_REP eine Zykluslänge eines Messereignisses ist; und

n = 0, 1, 2..., solange die SFN niedriger als der maximale Wert von n ist.

6. Verfahren nach Anspruch 1, wobei die Identifizierungszeit bestimmt wird gemäß der verfügbaren Inter-Frequenz-/-System-Messzeit oder gemäß einer gegebenen Zeit, die gleich der verfügbaren Inter-Frequenz-/-System-Messzeit abzüglich einer Umschaltzeit eines Empfängers ist.

7. Verfahren nach Anspruch 1, wobei die Identifizierungszeit bestimmt wird gemäß der Anzahl der Frames oder Sub-Frames, die empfangene Sendesignale einer Zielzelle und/oder Pilotsignale enthalten, innerhalb der verfügbaren Inter-Frequenz-/-System-Messzeit oder innerhalb einer gegebenen Zeit, die gleich der verfügbaren Inter-Frequenz-/-System-Messzeit abzüglich einer Umschaltzeit eines Empfängers ist.

8. Verfahren nach Anspruch 1, wobei die Meldezeit bestimmt wird gemäß der verfügbaren Inter-Frequenz-/-System-Messzeit oder gemäß einer gegebenen Zeit, die gleich der verfügbaren Inter-Frequenz-/-System-Messzeit abzüglich einer Umschaltzeit eines Empfängers ist.

9. Verfahren nach Anspruch 1, wobei die Meldezeit bestimmt wird gemäß der Anzahl der Frames oder Sub-Frames, die empfangene Sendesignale einer Zielzelle und/oder Pilotsignale enthalten, innerhalb der verfügbaren Inter-Frequenz-/- System-Messzeit oder innerhalb einer gegebenen Zeit, die gleich der verfügbaren Inter-Frequenz-/-System-Messzeit abzüglich einer Umschaltzeit eines Empfängers ist.

10. Verfahren nach Anspruch 6, wobei das UE ein Frequency-Division-Duplex UE, FDD UE, ist, die neue Zelle eine Inter-Frequenzzelle des FDD UE ist, und die Identifizierungszeit, die durch das FDD UE bestimmt wird, durch die folgende Formel berechnet wird:

$$T_{\text{Identifizieren, inter}} = Ceil \left\{ \frac{T_{\text{Basis\_Identifizieren\_FDD, inter}}}{T_{\text{inter}}} \right\} \cdot T_{\text{Mess}} \cdot N_{\text{Freq,FDD}} \ ,$$

worin $T_{\text{Identifizieren, inter}}$ eine Identifizierungszeit für das FDD UE darstellt, das eine Inter-Frequenzzelle identifiziert;

$T_{\text{Basis\_Identifizieren\_FDD, inter}}$ = 300 ms, eine maximal gestattete Zeit ist, um eine neue Inter-Frequenzzelle für das FDD UE zu identifizieren;

$N_{Freq,FDD}$ die Anzahl an FDD-Frequenzen ist, die in einer Informationsliste über Inter-Frequenzzellen in einer Steuerungsinformation zur Systemmessung angezeigt wird, die durch ein Zugriffsnetzwerk ausgegeben wird;

$T_{Mess} = [(N_{FDD} + N_{TDD} + N_{GSM}) \cdot N_{TTI} \cdot M\_REP \cdot 10]$

worin $N_{TTI}$ das TTI als eine Anzahl von Frames mit 10 ms des FACH mit dem größten TTI auf dem SCCPCH ist, der von dem FDD UE ausgewählt wird, und FACHs, die nur logische Kanäle des MBMS tragen, von den Messereignis-Berechnungen ausgeschlossen sind;

M_REP eine Zykluslänge des Messereignisses ist, und $M\_REP = 2^k$, worin k ein FACH-Koeffizient für die Zykluslänge des Messereignisses ist;

$N_{FDD}$ gleich 0 oder 1 ist; falls es eine FDD-Inter-Frequenzzelle in einer Informationsliste von benachbarten Zellen gibt, $N_{FDD} = 1$; andernfalls, $N_{FDD} = 0$;

$N_{TDD}$ gleich 0 oder 1 ist; falls es eine TDD-Inter-Frequenzzelle in der Informationsliste von benachbarten Zellen gibt, $N_{TDD} = 1$; andernfalls, $N_{TDD} = 0$;

$N_{GSM}$ gleich 0 oder 1 ist; falls es eine GSM-Inter-Frequenzzelle in der Informationsliste von benachbarten Zellen gibt, $N_{GSM} = 1$; andernfalls, $N_{GSM} = 0$;

$T_{inter}$ eine verfügbare Inter-Frequenz-Messzeit ist, die von dem FDD UE mit der erforderlichen Demodulierungsgüte bestimmt wird, die für den empfangenen MBMS gesichert ist; wobei, falls eine Umschaltzeit eines Empfängers berücksichtigt wird, $T_{inter}$ gleich der verfügbaren Inter-Frequenz-Messzeit abzüglich der Umschaltzeit des Empfängers ist.

**11.** Verfahren nach Anspruch 8, wobei das UE ein FDD UE ist und die neue Zelle eine Inter-Frequenzzelle des FDD UE ist und die Meldezeit, die durch das FDD UE bestimmt wird, durch die folgende Formel berechnet wird:

$$T_{Messung,\,inter} = Max \left\{ T_{Messung\_Period,inter},\; 2 \cdot T_{Mess},\; Ceil \left\{ \frac{T_{Basis\_Messung\_FDD,\,inter}}{T_{inter}} \right\} \cdot T_{Mess} \cdot N_{Freq,FDD} \right\}$$

$T_{Basis\_Messung\_FDD,inter} = 50$ ms;

$T_{Messung\_Period,inter} = 480$ ms;

$N_{Freq,FDD}$ die Anzahl der FDD-Frequenzen ist, die in einer Informationsliste von Inter-Frequenzzellen in einer Steuerungsinformation zur Systemmessung angezeigt wird, die durch ein Zugriffsnetzwerk ausgegeben wird;

$$T_{Mess} = [(N_{FDD} + N_{TDD} + N_{GSM}) \cdot N_{TTI} \cdot M\_REP \cdot 10],$$

worin

$N_{TTI}$ das TTI als eine Anzahl von Frames mit 10 ms des FACH mit dem größten TTI auf dem SCCPCH ist, der von dem FDD UE ausgewählt wird, und FACHs, die nur logische Kanäle des MBMS tragen, von den Messereignis-Berechnungen ausgeschlossen sind;

M_REP eine Zykluslänge des Messereignisses ist, und $M\_REP = 2^k$, worin k ein FACH-Koeffizient für die Zykluslänge des Messereignisses ist;

$N_{FDD}$ gleich 0 oder 1 ist; falls es eine FDD-Inter-Frequenzzelle in einer Informationsliste von benachbarten Zellen gibt, $N_{FDD} = 1$; andernfalls, $N_{FDD} = 0$;

$N_{TDD}$ gleich 0 oder 1 ist; falls es eine TDD-Inter-Frequenzzelle in der Informationsliste von benachbarten Zellen gibt, $N_{TDD} = 1$; andernfalls, $N_{TDD} = 0$;

$N_{GSM}$ gleich 0 oder 1 ist; falls es eine GSM-Inter-Frequenzzelle in der Informationsliste von benachbarten Zellen gibt, $N_{GSM} = 1$; andernfalls, $N_{GSM} = 0$;

$T_{inter}$ eine verfügbare Inter-Frequenz-Messzeit, die von dem FDD UE mit der erforderlichen Demodulierungsgüte bestimmt wird, die für den empfangenen

MBMS gesichert ist, oder eine gegebene Zeit ist, die gleich der verfügbaren Inter-Frequenz-Messzeit abzüglich einer Umschaltzeit eines Empfängers ist.

**12.** Verfahren nach Anspruch 6, wobei das UE ein FDD UE ist, die neue Zelle eine Inter-System-WCDMA-TDD-Zelle ist, und die Identifizierungszeit, die von dem FDD UE bestimmt wird, durch die folgende Formel bestimmt wird:

$$T_{\text{Identifizieren, TDD}} = Max\left\{5000, Ceil\left\{\frac{T_{\text{Basis\_Identifizieren\_TDD, inter}}}{T_{\text{inter}}}\right\} \cdot T_{\text{Mess}} \cdot N_{Freq,TDD}\right\},$$

worin

$T_{\text{Basis\_Identifizieren\_TDD,inter}}$ eine maximal gestattete Zeit ist, um eine neue WCDMA-TDD-Zelle für das FDD UE zu identifizieren;

$N_{\text{Freq,TDD}}$ die Anzahl der TDD-Frequenzen ist, die in einer Informationsliste der Inter-Frequenzzellen in einer Steuerungsinformation zur Systemmessung

angezeigt wird, die durch ein Zugriffsnetzwerk ausgegeben wird;

$$T_{\text{Mess}} = [(N_{FDD} + N_{TDD} + N_{GSM}) \cdot N_{\text{TTI}} \cdot M\_REP \cdot 10],$$

worin

$T_{\text{TTI}}$ das TTI (als eine Anzahl von Frames mit 10 ms) des FACH mit dem größten TTI auf dem SCCPCH ist, der von dem FDD UE ausgewählt wird, und FACHs, die nur logische Kanäle des MBMS tragen, von den Messereignis-Berechnungen ausgeschlossen sind;

$M\_REP$ eine Zykluslänge des Messereignisses ist, und $M\_REP = 2^k$, worin k ein FACH-Koeffizient für die Zykluslänge des Messereignisses ist;

$N_{\text{FDD}}$ gleich 0 oder 1 ist; falls es eine FDD-Inter-Frequenzzelle in einer Informationsliste von benachbarten Zellen gibt, $N_{\text{FDD}} = 1$; andernfalls, $N_{\text{FDD}} = 0$;

$N_{\text{TDD}}$ gleich 0 oder 1 ist; falls es eine TDD-Inter-Frequenzzelle in der Informationsliste von benachbarten Zellen gibt, $N_{\text{TDD}} = 1$; andernfalls, $N_{\text{TDD}} = 0$;

$N_{\text{GSM}}$ gleich 0 oder 1 ist; falls es eine GSM-Inter-Frequenzzelle in der Informationsliste von benachbarten Zellen gibt, $N_{\text{GSM}} = 1$; andernfalls, $N_{\text{GSM}} = 0$;

$T_{\text{inter}}$ eine verfügbare Inter-Frequenz-Messzeit, die von dem FDD UE mit der erforderlichen Demodulierungsgüte bestimmt wird, die für den empfangenen

MBMS gesichert ist, oder eine gegebene Zeit ist, die gleich der verfügbaren Inter-Frequenz-Messzeit abzüglich einer Umschaltzeit eines Empfängers ist.

13. Verfahren nach Anspruch 8, wobei das UE ein FDD UE ist und die neue Zelle eine Inter-System-WCDMA-TDD-Zelle ist und die Meldezeit, die durch das FDD UE bestimmt wird, durch die folgende Formel berechnet wird:

$$T_{\text{Messung, TDD}} = Max\left\{T_{\text{Messung\_Period\_TDD,inter}}, 2 \cdot T_{\text{Mess}}, Ceil\left\{\frac{T_{\text{Basis\_Messung\_TDD, inter}}}{T_{\text{inter}}}\right\} \cdot T_{\text{Mess}} \cdot N_{Freq,TDD}\right\}$$

worin

$T_{\text{Basis\_Messung\_TDD,inter}} = 50$ ms;
$T_{\text{Messung\_Period\_TDD,inter}} = 480$ ms;

$$T_{\text{Mess}} = [(N_{FDD} + N_{TDD} + N_{GSM}) \cdot N_{\text{TTI}} \cdot M\_REP \cdot 10],$$

worin

$N_{\text{TTI}}$ das TTI als eine Anzahl von Frames mit 10 ms des FACH mit dem größten TTI auf dem SCCPCH ist, der von dem FDD UE ausgewählt wird, und FACHs, die nur logische Kanäle des MBMS tragen, von den Messereignis-Berechnungen ausgeschlossen sind;

M_REP eine Zykluslänge des Messereignisses ist, und M_REP = $2^k$, worin k ein FACH-Koeffizient für die Zykluslänge des Messereignisses ist;

$N_{FDD}$ gleich 0 oder 1 ist; falls es eine FDD-Inter-Frequenzzelle in einer Informationsliste von benachbarten Zellen gibt, $N_{FDD}$ = 1; andernfalls, $N_{FDD}$ = 0;

$N_{TDD}$ gleich 0 oder 1 ist; falls es eine TDD-Inter-Frequenzzelle in der Informationsliste von benachbarten Zellen gibt, $N_{TDD}$ = 1; andernfalls, $N_{TDD}$ = 0;

$N_{GSM}$ gleich 0 oder 1 ist; falls es eine GSM-Inter-Frequenzzelle in der Informationsliste von benachbarten Zellen gibt, $N_{GSM}$ = 1; andernfalls, $N_{GSM}$ = 0;

$N_{Freq,TDD}$ die Anzahl der TDD-Frequenzen ist, die in einer Informationsliste von Inter-Frequenzzellen in einer Steuerungsinformation zur Systemmessung angezeigt wird, die durch ein Universal Terrestrial Radio Access Network, UTRAN, ausgegeben wird;

$T_{inter}$ eine verfügbare Inter-Frequenz-Messzeit, die von dem FDD UE mit der erforderlichen Demodulierungsgüte bestimmt wird, die für den empfangenen

MBMS gesichert ist, oder eine gegebene Zeit ist, die gleich der verfügbaren Inter-Frequenz-Messzeit abzüglich einer Umschaltzeit eines Empfängers ist.

14. Verfahren nach Anspruch 6, wobei das UE ein FDD UE ist, die neue Zelle eine Intra-Frequenzzelle des FDD UE ist, und die Identifizierungszeit, die von dem FDD UE bestimmt wird, durch die folgende Formel bestimmt wird:

$$T_{\text{Identifizieren, intra}} = Max\left\{800,\ Ceil\left\{\frac{T_{\text{Basis Identifizieren FDD, intra}}}{T_{\text{intra}}}\right\}\cdot N_{TTI}\cdot M\_REP\cdot 10\right\},$$

worin

$T_{\text{Basis Identifizieren FDD, intra}}$ = 800 ms;

$N_{TTI}$ das TTI als eine Anzahl von Frames mit 10 ms des FACH mit dem größten TTI auf dem SCCPCH ist, der von dem FDD UE ausgewählt wird, und FACHs, die nur logische Kanäle des MBMS tragen, von den Messereignis-Berechnungen ausgeschlossen sind;

M_REP eine Zykluslänge des Messereignisses ist, und M_REP = $2^k$, worin k ein FACH-Koeffizient für die Zykluslänge des Messereignisses ist;

$T_{intra}$ eine verfügbare Intra-Frequenz-Messzeit, die von dem FDD UE mit der erforderlichen Demodulierungsgüte bestimmt wird, die für den empfangenen MBMS gesichert ist, oder eine gegebene Zeit ist, die gleich der verfügbaren Inter-Frequenz-Messzeit abzüglich einer Umschaltzeit eines Empfängers ist.

15. Verfahren nach Anspruch 1, wobei die Anforderung zur Ausführung der Messung ferner die Anzahl der gemeldeten Zellen umfasst, das UE ein FDD UE ist, die neue Zelle eine Intra-Frequenzzelle des FDD UE ist, die Meldezeit, die durch das FDD UE bestimmt wird, 200 ms ist und die Anzahl der gemeldeten Zellen durch die folgende Formel berechnet wird:

$$Y_{\text{Messung intra}} = Floor\left\{X_{\text{Basis Messung FDD}}\cdot\frac{T_{\text{Messung\_period Intra}} - Ceil\left\{\frac{T_{\text{Messung\_Period intra}}}{N_{TTI}\cdot M\_REP\cdot 10\ ms}\right\}\cdot T_{in}}{T_{\text{Messung\_period Intra}}}\right\},$$

worin

$X_{\text{Basis Messung FDD}}$ = 8;

$T_{\text{Messung\_Period Intra}}$ eine Intra-Frequenzmessperiode ist;

$T_{in}$ = $T_{TTI}$ * 10, eine verfügbare Inter-Frequenz-/-System-Messzeit ist, die durch das FDD UE mit der erforderlichen Demodulierungsgüte bestimmt wird, die für den empfangenen MBMS gesichert wird, oder eine gegebene Zeit, die gleich der verfügbaren Inter-Frequenz-/-System-Messzeit abzüglich einer Umschaltzeit eines Empfängers ist.

**16.** Verfahren nach Anspruch 6, wobei das UE ein 3,84 Mcps TDD UE ist, die neue Zelle eine Inter-Frequenz-TDD-Zelle des TDD UE ist, und die Identifizierungszeit, die von dem UE bestimmt wird, durch die folgende Formel bestimmt wird:

$$T_{\text{Identifizieren, inter}} = Max \left\{ 5000, \; Ceil \left\{ \frac{T_{\text{Basis\_Identifizieren\_TDD, inter}}}{T_{\text{inter}}} \right\} \cdot T_{\text{Mess}} \cdot N_{Freq, TDD} \right\},$$

worin

$T_{\text{Basis\_Identifizieren\_TDD}}$ inter eine maximal gestattete Zeit ist, um eine Inter-Frequenzzelle für das TDD UE zu identifizieren;

$N_{\text{Freq,TDD}}$ die Anzahl der TDD-Frequenzen ist, die in einer Informationsliste der Inter-Frequenzzellen in einer Steuerungsinformation zur Systemmessung angezeigt wird, die durch ein Zugriffsnetzwerk ausgegeben wird;

$$T_{\text{Mess}} = [(N_{FDD} + N_{TDD} + N_{GSM}) \cdot N_{\text{TTI}} \cdot M\_REP \cdot 10],$$

worin

$N_{\text{TTI}}$ das TTI als eine Anzahl von Frames mit 10 ms des FACH mit dem größten TTI auf dem SCCPCH ist, der von dem UE ausgewählt wird, und FACHs, die nur logische Kanäle des MBMS tragen, von den Messereignis-Berechnungen ausgeschlossen sind;

M\_REP eine Zykluslänge des Messereignisses ist, und $M\_REP = 2^k$, worin k ein FACH-Koeffizient für die Zykluslänge des Messereignisses ist;

$N_{FDD}$ gleich 0 oder 1 ist; falls es eine FDD-Inter-Frequenzzelle in einer Informationsliste von benachbarten Zellen gibt, $N_{FDD} = 1$; andernfalls, $N_{FDD} = 0$;

$N_{TDD}$ gleich 0 oder 1 ist; falls es eine TDD-Inter-Frequenzzelle in der Informationsliste von benachbarten Zellen gibt, $N_{TDD} = 1$; andernfalls, $N_{TDD} = 0$;

$N_{GSM}$ gleich 0 oder 1 ist; falls es eine GSM-Inter-Frequenzzelle in der Informationsliste von benachbarten Zellen gibt, $N_{GSM} = 1$; andernfalls, $N_{GSM} = 0$;

$T_{\text{inter}}$ eine verfügbare Inter-Frequenz-Messzeit, die von dem TDD UE mit der erforderlichen Demodulierungsgüte bestimmt wird, die für den empfangenen MBMS gesichert ist, oder eine gegebene Zeit ist, die gleich der verfügbaren Inter-Frequenz-Messzeit abzüglich einer Umschaltzeit eines Empfängers ist.

**17.** Verfahren nach Anspruch 7, wobei das UE ein 1,28 Mcps TDD UE ist, die neue Zelle eine Inter-Frequenzzelle des TDD UE ist und die Identifizierungszeit, die von dem UE bestimmt wird, durch die folgende Formel bestimmt wird:

$$T_{\text{Identifizieren inter}} = Max \left\{ 5000, \; N_{\text{Basis\_identifizieren\_TDD, inter}} \cdot \frac{T_{\text{Messung\_period, inter}}}{N_{\text{inter}}} \cdot N_{Freq} \right\},$$

worin

$T_{\text{Basis\_Identifizieren\_TDD,inter}}$ eine maximal gestattete Zeit ist, um eine Inter-Frequenzzelle für das TDD UE zu identifizieren;

$T_{\text{Messung\_Period inter}} = 480$ ms;

$N_{Freq}$ die Anzahl der TDD-Frequenzen ist, die in einer Informationsliste der Inter-Frequenzzellen in einer Steue-

38

rungsinformation zur Systemmessung angezeigt wird, die durch ein UTRAN angezeigt wird;

$N_{inter}$ die Anzahl der Sub-Frames ist, worin Signale von sowohl einem DwPCH als auch einem PCCPCH einer Ziel-Inter-Frequenz-TDD-Zelle lokalisiert sind, und

die Signale innerhalb der verfügbaren Inter-Frequenz-Messzeit empfangen werden, die durch das TDD UE basierend auf der erforderlichen Demodulierungsgüte bestimmt wird, die für den empfangenen MBMS sichergestellt wird, oder die Anzahl der Sub-Frames ist, worin Signale von sowohl einem DwPCH als auch einem PCCPCH einer Ziel-Inter-Frequenz-TDD-Zelle lokalisiert sind, die Signale innerhalb einer gegebenen Zeit empfangen werden, die gleich der verfügbaren Inter-Frequenz-Messzeit abzüglich einer Umschaltzeit eines Empfängers ist.

18. Verfahren nach Anspruch 8, wobei das UE ein 3,84 Mcps TDD UE ist, die Zelle eine Inter-Frequenzzelle des TDD UE ist, und die Meldezeit, die von dem UE bestimmt wird, durch die folgende Formel berechnet wird:

$$T_{\text{Messung, inter}} = Max \left\{ T_{\text{Messung Period TDD,inter}}, 2 \cdot T_{\text{Mess}}, Ceil \left\{ \frac{T_{\text{Basis Messung TDD, inter}}}{T_{\text{inter}}} \right\} \cdot T_{\text{Mess}} \cdot N_{\text{Freq}} \right.$$

worin

$T_{\text{Basis}}$ Messung $T_{DD,inter}$ = 50 ms;
$T_{\text{Messung Period TDD,inter}}$ = 480 ms;
$N_{\text{Freq}}$ die Anzahl der TDD-Frequenzen ist, die in einer Informationsliste der Inter-Frequenzzellen in einer Steuerungsinformation zur Systemmessung angezeigt wird, die durch ein UTRAN angezeigt wird;

$$T_{\text{Mess}} = [(N_{FDD} + N_{TDD} + N_{GSM}) \cdot N_{TTI} \cdot M\_REP \cdot 10],$$

worin

$N_{TTI}$ das TTI als eine Anzahl von Frames mit 10 ms des FACH mit dem größten TTI auf dem SCCPCH ist, der von dem UE ausgewählt wird, und FACHs, die nur logische Kanäle des MBMS tragen, von den Messereignis-Berechnungen ausgeschlossen sind;

M_REP eine Zykluslänge des Messereignisses ist, und M_REP = $2^k$, worin k ein FACH-Koeffizient für die Zykluslänge des Messereignisses ist;

$N_{FDD}$ gleich 0 oder 1 ist; falls es eine FDD-Inter-Frequenzzelle in einer Informationsliste von benachbarten Zellen gibt, $N_{FDD}$ = 1; andernfalls, $N_{FDD}$ = 0;

$N_{TDD}$ gleich 0 oder 1 ist; falls es eine TDD-Inter-Frequenzzelle in der Informationsliste von benachbarten Zellen gibt, $N_{TDD}$ = 1; andernfalls, $N_{TDD}$ = 0;

$N_{GSM}$ gleich 0 oder 1 ist; falls es eine GSM-Inter-Frequenzzelle in der Informationsliste von benachbarten Zellen gibt, $N_{GSM}$ = 1; andernfalls, $N_{GSM}$ = 0;

$T_{inter}$ eine verfügbare Inter-Frequenz-Messzeit, die von dem TDD UE mit der erforderlichen Demodulierungsgüte bestimmt wird, die für den empfangenen MBMS gesichert ist, oder eine gegebene Zeit ist, die gleich der verfügbaren Inter-Frequenz-Messzeit abzüglich einer Umschaltzeit eines Empfängers ist.

19. Verfahren nach Anspruch 9, wobei das UE ein 1,28 Mcps TDD UE ist, die Zelle eine Inter-Frequenzzelle des TDD UE ist, und die Meldezeit, die von dem UE bestimmt wird, durch die folgende Formel berechnet wird:

$$T_{\text{Messung inter}} = Max \left\{ T_{\text{Messung\_Period inter}}, N_{\text{Basis\_Messung\_TDD, inter}} \cdot \frac{T_{\text{Messung\_period, inter}}}{N_{\text{inter}}} \cdot N_{\text{Freq}} \right\} \text{ ms },$$

worin

$T_{messung\_Period\ inter}$ = 480 ms;
$T_{Basis\_Messung\_TDD,inter}$ = 50 ms;
$N_{Freq}$ die Anzahl der TDD-Frequenzen ist, die in einer Informationsliste der Inter-Frequenzzellen in einer Steuerungsinformation zur Systemmessung angezeigt wird, die durch ein UTRAN angezeigt wird;

$N_{inter}$ die Anzahl der Sub-Frames ist, worin Signale von sowohl einem DwPCH als auch einem PCCPCH einer Ziel-Inter-Frequenz-TDD-Zelle angeordnet sind, und die Signale innerhalb der verfügbaren Inter-Frequenz-Messzeit empfangen werden, die durch das TDD UE mit der erforderlichen Demodulierungsgüte bestimmt wird, die für den empfangenen MBMS sichergestellt wird, oder die Anzahl der Sub-Frames ist, worin Signale von sowohl einem DwPCH als auch einem PCCPCH einer Ziel-Inter-Frequenz-TDD-Zelle angeordnet sind, die Signale innerhalb einer gegebenen Zeit empfangen werden, die gleich der verfügbaren Inter-Frequenz-Messzeit abzüglich einer Umschaltzeit eines Empfängers ist.

**20.** Verfahren nach Anspruch 6, wobei das UE ein 3,84 Mcps TDD UE ist, die neue Zelle eine WCDMA-TDD-Zelle ist und die Identifizierungszeit, die von dem TDD UE bestimmt wird, durch die folgende Formel bestimmt wird:

$$T_{Identifizieren\ FDD\ inter} = Max\left\{5000,\ Ceil\left\{\frac{T_{Basis\_Identifizieren\_FDD,\ inter}}{T_{inter}}\right\} \cdot T_{Mess} \cdot N_{Freq,FDD}\right\},$$

worin

$T_{Basis\_Identifizieren\_FDD,inter}$ = 800 ms, eine maximal gestattete Zeit ist, um eine WCDMA-TDD-Zelle für das TDD UE zu identifizieren;

$$T_{Mess} = [(N_{FDD} + N_{TDD} + N_{GSM}) \cdot N_{TTI} \cdot M\_REP \cdot 10],$$

worin

$N_{TTI}$ das TTI als eine Anzahl von Frames mit 10 ms des FACH mit dem größten TTI auf dem SCCPCH ist, der von dem UE ausgewählt wird, und FACHs, die nur logische Kanäle des MBMS tragen, von den Messereignis-Berechnungen ausgeschlossen sind;

M_REP eine Zykluslänge des Messereignisses ist, und M_REP = $2^k$, worin k ein FACH-Koeffizient für die Zykluslänge des Messereignisses ist;

$N_{FDD}$ gleich 0 oder 1 ist; falls es eine FDD-Inter-Frequenzzelle in einer Informationsliste von benachbarten Zellen gibt, $N_{FDD}$ = 1; andernfalls, $N_{FDD}$ = 0;

$N_{TDD}$ gleich 0 oder 1 ist; falls es eine TDD-Inter-Frequenzzelle in der Informationsliste von benachbarten Zellen gibt, $N_{TDD}$ = 1; andernfalls, $N_{TDD}$ = 0;

$N_{GSM}$ gleich 0 oder 1 ist; falls es eine GSM-Inter-Frequenzzelle in der Informationsliste von benachbarten Zellen gibt, $N_{GSM}$ = 1; andernfalls, $N_{GSM}$ = 0;

$N_{Freq,FDD}$ die Anzahl der FDD-Frequenzen ist, die in einer Informationsliste der Inter-Frequenzzellen in einer Steuerungsinformation zur Systemmessung angezeigt wird, die durch ein UTRAN angezeigt wird;

$T_{inter}$ eine verfügbare Inter-Frequenz-Messzeit, die von dem TDD UE mit der erforderlichen Demodulierungsgüte bestimmt wird, die für den empfangenen MBMS gesichert ist, oder eine gegebene Zeit ist, die gleich der verfügbaren Inter-Frequenz-Messzeit abzüglich einer Umschaltzeit eines Empfängers ist.

**21.** Verfahren nach Anspruch 6, wobei das UE ein 1,28 Mcps TDD UE ist, die neue Zelle eine WCDMA-FDD-Zelle ist und die Identifizierungszeit, die von dem UE bestimmt wird, durch die folgende Formel bestimmt wird:

$$T_{Identifizieren\_FDD\ inter} = Max\left\{5000,\ T_{Basis\ identifizieren\ FDD,\ inter} \cdot \frac{T_{Messung\_period\ FDD\ inter}}{T_{inter}} \cdot N_{Freq}\right\}\ ms,$$

worin

$T_{Basis\_Identifizieren\_FDD, inter}$ =800 ms, eine maximal gestattete Zeit ist, um eine neue FDD-Zelle für das TDD UE zu identifizieren;

$T_{Messung\_Period FDD inter}$ = 480 ms;

$N_{Freq}$ die Anzahl der TDD-Frequenzen ist, die in einer Informationsliste der Inter-Frequenzzellen in einer Steuerungsinformation zur Systemmessung angezeigt wird, die durch ein UTRAN angezeigt wird;

$T_{inter}$ eine verfügbare Inter-Frequenz-Messzeit ist, die durch das TDD UE mit der erforderlichen Demodulierungsgüte bestimmt wird, die für den empfangenen MBMS sichergestellt wird, oder eine gegebene Zeit ist, die gleich der verfügbaren Inter-Frequenz-Messzeit abzüglich einer Umschaltzeit eines Empfängers ist.

**22.** Verfahren nach Anspruch 8, wobei das UE ein 3,84 Mcps TDD UE ist, die neue Zelle eine Zwischensystem-WCDMA-TDD-Zelle ist und die Meldezeit, die von dem TDD UE bestimmt wird, durch die folgende Formel berechnet wird:

$$T_{Messung FDD\ inter} = Max\left\{ T_{Messung\ period\ FDD\ inter}, \ 2 \cdot T_{Mess}, \ Ceil\left\{ \frac{T_{Basis\_Messung\_FDD, inter}}{T_{inter}} \right\} \right\} \cdot T_{Mess} \cdot N_{Freq,FL}$$

worin

$T_{Basis\_Messung\_FDD,inter}$ = 50 ms;

$T_{Messung\_Period FDD,inter}$ = 480 ms;

$N_{Freq,TDD}$ die Anzahl der TDD-Frequenzen ist, die in einer Informationsliste der Inter-Frequenzzellen in einer Steuerungsinformation zur Systemmessung angezeigt wird, die durch ein Zugriffsnetzwerk ausgegeben wird;

$$T_{Mess} = [(N_{FDD} + N_{TDD} + N_{GSM}) \cdot N_{TTI} \cdot M\_REP \cdot 10]$$

$N_{TTI}$ das TTI als eine Anzahl von Frames mit 10 ms des FACH mit dem größten TTI auf dem SCCPCH ist, der von dem UE ausgewählt wird, und FACHs, die nur logische Kanäle des MBMS tragen, von den Messereignis-Berechnungen ausgeschlossen sind;

M_REP eine Zykluslänge des Messereignisses ist, und M_REP = $2^k$, worin k ein FACH-Koeffizient für die Zykluslänge des Messereignisses ist;

$N_{FDD}$ gleich 0 oder 1 ist; falls es eine FDD-Inter-Frequenzzelle in einer Informationsliste von benachbarten Zellen gibt, $N_{FDD}$ = 1; andernfalls, $N_{FDD}$ = 0;

$N_{TDD}$ gleich 0 oder 1 ist; falls es eine TDD-Inter-Frequenzzelle in der Informationsliste von benachbarten Zellen gibt, $N_{TDD}$ = 1; andernfalls, $N_{TDD}$ = 0;

$N_{GSM}$ gleich 0 oder 1 ist; falls es eine GSM-Inter-Frequenzzelle in der Informationsliste von benachbarten Zellen gibt, $N_{GSM}$ = 1; andernfalls, $N_{GSM}$ = 0;

$T_{inter}$ eine verfügbare Inter-Frequenz-Messzeit, die von dem TDD UE mit der erforderlichen Demodulierungsgüte bestimmt wird, die für den empfangenen MBMS gesichert ist, oder eine gegebene Zeit ist, die gleich der verfügbaren Inter-Frequenz-Messzeit abzüglich einer Umschaltzeit eines Empfängers ist.

**23.** Verfahren nach Anspruch 8, wobei das UE ein 1,28 Mcps TDD UE ist, die neue Zelle eine Inter-System-WCDMA-TDD-Zelle ist, und die Meldezeit, die von dem TDD UE bestimmt wird, durch die folgende Formel berechnet wird:

$$T_{Messung\_FDD inter} = Max\left\{ T_{Messung\_Period FDD inter}, \ T_{Basis\_Messung\_FDD, inter} \cdot \frac{T_{Messung\_period,\_FDD inter}}{T_{inter}} \cdot N_{Freq} \right\} m$$

worin

$T_{Messung\_Period\ FDD}$ inter = 480 ms;
$T_{Basis\_Messung\_FDD,inter}$ = 50 ms;
$N_{Freq}$ die Anzahl der TDD-Frequenzen ist, die in einer Informationsliste der Inter-Frequenzzellen in einer Steuerungsinformation zur Systemmessung angezeigt wird, die durch ein UTRAN angezeigt wird;
$T_{inter}$ eine verfügbare Inter-Frequenz-Messzeit, die durch das TDD UE mit der erforderlichen Demodulierungsgüte bestimmt wird, die für den empfangenen MBMS sichergestellt wird, oder eine gegebenen Zeit ist, die gleich der verfügbaren Inter-Frequenz-Messzeit abzüglich einer Umschaltzeit eines Empfängers ist.

**24.** Verfahren nach Anspruch 9, wobei das UE ein TDD UE ist, und die neue Zelle eine Intra-Frequenzzelle des TDD UE ist und die Identifizierungszeit, die von dem FDD UE bestimmt wird, durch die folgende Formel bestimmt wird:

$$T_{Identifizieren,\ intra} = T_{Basis\ Identifizieren\ TDD,\ intra} \cdot \frac{N_{Period,\ Intra}}{N_{Intra}},$$

worin

$T_{Basis\ Identifizieren\ TDD,\ intra}$ = 800 ms;
$N_{Period,\ intra}$ = 40 ms;
$N_{Intra}$ die Anzahl von Sub-Frames ist, in denen Signale von sowohl DwPCH als auch PCCPCH einer Ziel-Inter-Frequenz-TDD-Zelle lokalisiert sind, und wobei die Signale innerhalb einer verfügbaren Intra-Frequenz-Messzeit empfangen werden, die mit der erforderlichen Demodulierungsgüte bestimmt wird, die für den empfangenen MBMS gesichert ist.

**25.** Verfahren nach Anspruch 1, wobei die Anforderung an die Ausführung der Messung ferner die Anzahl der gemeldeten Zellen umfasst, das UE ein TDD UE ist, die neue Zelle eine Intra-Frequenzzelle des TDD UE ist, die Meldezeit, die durch das FDD UE bestimmt wird, 200 ms ist und die Anzahl der gemeldeten Zellen durch die folgende Formel berechnet wird:

$$Y_{Messung\ intra} = Floor \left\{ X_{Basis\ Messung\ TDD} \cdot \frac{N_{Intra}}{N_{period\ Intra}} \right\},$$

worin

$X_{Basis\ Messung\ TDD}$ = 8;
$N_{Period\ Intra}$ = 40 ms;
$N_{Period\ Intra}$ die Anzahl von Sub-Frames ist, in denen Signale von sowohl DwPCH als auch PCCPCH einer Ziel-Inter-Frequenz-TDD-Zelle lokalisiert sind, und wobei die Signale innerhalb einer verfügbaren Intra-Frequenz-Messzeit empfangen werden, die mit der erforderlichen Demodulierungsgüte bestimmt wird, die für den empfangenen MBMS gesichert ist.

**26.** Verfahren nach Anspruch 6, 8 oder 15, wobei die Inter-Frequenz-Messzeit nicht höher als 25 % des TTI eines Multimedia Broadcast/Multicast Point-to-multipoint-D (MTCH) ist.

**27.** Verfahren nach einem der Ansprüche 6 bis 23 oder 26, wobei die Umschaltzeit des Empfängers durch das Leistungsvermögen der Hardware des Empfängers bestimmt wird und ein üblicher Wert des Empfängers bei 1 ms liegt.

**28.** Verfahren nach Anspruch 1, wobei der MBMS zumindest eine der folgenden umfasst:

eine Multimedia Broadcast/Multicast Point-to-multipoint-Service-Information und
eine Multimedia Broadcast/Multicast Point-to-multipoint-Steuerungs-Information.

**42**

**29.** Vorrichtung zum Empfangen eines Multimedia Broadcast/Multicast-Diensts MBMS durch ein UE, wobei das UE in der Lage ist, eine Inter-Frequenz-/- System-Messzeit zu verwenden, um kontinuierlich eine Inter-Frequenz-/- Systemzelle zu messen, **dadurch gekennzeichnet, dass** die Vorrichtung umfasst:

Auswahlmittel, geeignet, um einen Anteil der Inter-Frequenz-/-System-Messzeit als eine verfügbare Inter-Frequenz-/-System-Messzeit auszuwählen, um eine Inter-Frequenz-/-System-Messung einer Inter-Frequenz-/-System-Zelle durchzuführen, um einer erforderlichen Demodulierungsgüte des empfangenen MBMS in dem anderen Anteil zu genügen;

Empfangsmittel, geeignet, um den MBMS in dem anderen Anteil der Inter-Frequenz-/-System-Messzeit zu empfangen; und

Bestimmungsmittel, geeignet, um eine Identifizierungszeit der Inter-Frequenz-/- System-Zelle und eine Meldezeit eines Ergebnisses der Messung, basierend auf der verfügbaren Inter-Frequenz-/-System-Messzeit zu bestimmen, um einer Anforderung an die Ausführung der Messung für die Inter-Frequenz-/-System-Zelle zu entsprechen.

**30.** Vorrichtung nach Anspruch 29, wobei die verfügbare Inter-Frequenz-/-System-Messzeit ein Anteil der Zykluslänge des Messereignisses von $N_{TTI}$-Frames ist, die einem Anteil der Übertragungszeitintervall-Länge, TTI-Länge, des MBMS entspricht, wobei $N_{TTI}$ das TTI als eine Anzahl von Frames mit 10 ms auf einem ausgewählten Secondary-Common-Control-Physical-Channel, SCCPCH, ist, und Forward-Access-Channels, FACHs, die nur logische Kanäle des MBMS tragen, von den Messereignis-Berechnungen ausgeschlossen sind.

**31.** Vorrichtung nach Anspruch 30, wobei der Anteil der TTI-Länge des MBMS bei 25 % der maximalen TTI-Länge des MBMS liegt.

**Revendications**

**1.** Procédé de mesure de système intermédiaire / fréquence intermédiaire destiné à un équipement utilisateur, UE, recevant un service de multidiffusion / diffusion multimédia MBMS, l'équipement UE étant apte à utiliser un temps de mesure de système intermédiaire / fréquence intermédiaire pour mesurer une cellule de système intermédiaire / fréquence intermédiaire en continu, **caractérisé en ce que** le procédé comporte les étapes ci-après consistant à:

sélectionner une partie du temps de mesure de système intermédiaire / fréquence intermédiaire en tant qu'un temps de mesure de système intermédiaire / fréquence intermédiaire disponible afin de mettre en oeuvre une mesure de système intermédiaire / fréquence intermédiaire d'une cellule de système intermédiaire / fréquence intermédiaire pour satisfaire des performances de démodulation requises d'un service MBMS dans l'autre partie;

recevoir un service MBMS dans l'autre partie du temps de mesure de système intermédiaire / fréquence intermédiaire; et

déterminer un temps d'identification de la cellule de système intermédiaire / fréquence intermédiaire et un temps d'établissement de rapport du résultat de la mesure sur la base du temps de mesure de système intermédiaire / fréquence intermédiaire disponible pour satisfaire à une exigence de performances de mesures pour la cellule de système intermédiaire / fréquence intermédiaire.

**2.** Procédé selon la revendication 1, dans lequel la partie de temps de mesure de système intermédiaire / fréquence intermédiaire est une partie de la durée de cycle d'occasion de mesure de trames $N_{TTI}$ laquelle correspond à une partie de la durée d'intervalle de synchronisation de transmission, TTI, de service MBMS, ladite durée $N_{TTI}$ est l'intervalle TTI, en nombre de trames de 10 ms, sur un canal physique de commande commun secondaire sélectionné, SCCPCH, et les canaux d'accès vers l'avant, FACH, qui ne transportent que des canaux logiques de service MBMS sont exclus des calculs d'occasion de mesure.

**3.** Procédé selon la revendication 2, dans lequel la partie de la durée d'intervalle TTI de service MBMS est égale à 25 % de la durée d'intervalle TTI de service MBMS au maximum.

**4.** Procédé selon la revendication 2 ou 3, dans lequel le temps de mesure de système intermédiaire / fréquence intermédiaire comporte au moins l'un parmi les éléments suivants: un intervalle de repos pour un équipement UE de duplexage par répartition dans le temps, TDD UE, et un temps de mesure pour l'équipement UE de duplexage TDD dans un état CELL_FACH au cours duquel une trame présente un nombre de trames de système, SFN, correspondant à la formule ci-après:

$$SFN = [C\_RNTI \bmod M\_REP + n * M\_REP] * N;$$

l'équipement UE de duplexage TDD met en oeuvre la mesure de système intermédiaire / fréquence intermédiaire dans une trame présentant le nombre SFN calculé par la formule; où

N est l'intervalle TTI en nombre de trames de 10 ms du canal FACH présentant le plus grand intervalle TTI sur le canal SCCPCH sélectionné par l'équipement UE de duplexage TDD, et les canaux FACH qui ne transportent que des canaux logiques de service MBMS sont exclus des calculs d'occasion de mesure;

C_RNTI est une valeur d'identité temporaire de réseau radio cellulaire, RNTI, C-RNTI, de l'équipement UE de duplexage TDD;

M_REP est une durée de cycle d'occasion de mesure; et

n = 0, 1, 2 ... dès lors que le nombre SFN est inférieur à la valeur maximale de n.

5. Procédé selon la revendication 2 ou 3, dans lequel le temps de mesure de système intermédiaire / fréquence intermédiaire est un temps de mesure pour l'équipement UE de duplexage par répartition en fréquence, FDD UE, dans un état CELL_FACH au cours duquel une trame présente un nombre SFN correspondant à la formule ci-après:

$$SFN = [C\_RNTI \bmod M\_REP + n * M\_REP] * N;$$

l'équipement UE de duplexage FDD met en oeuvre la mesure de système intermédiaire / fréquence intermédiaire dans une trame présentant le nombre SFN calculé par la formule; où

N est l'intervalle TTI en nombre de trames de 10 ms du canal FACH présentant le plus grand intervalle TTI sur le canal SCCPCH sélectionné par l'équipement UE de duplexage FDD, et les canaux FACH qui ne transportent que des canaux logiques de service MBMS sont exclus des calculs d'occasion de mesure;

C_RNTI est une valeur C_RNTI de l'équipement UE de duplexage FDD;

M_REP est une durée de cycle d'occasion de mesure; et

n = 0,1, 2... dès lors que le nombre SFN est inférieur à la valeur maximale de n.

6. Procédé selon la revendication 1, dans lequel ledit temps d'identification est déterminé en fonction du temps de mesure de système intermédiaire / fréquence intermédiaire disponible, ou en fonction d'un temps donné équivalent au temps de mesure de système intermédiaire / fréquence intermédiaire disponible moins le temps de commutation d'un récepteur.

7. Procédé selon la revendication 1, dans lequel ledit temps d'identification est déterminé en fonction du nombre de trames ou de sous-trames contenant des signaux de diffusion générale reçus d'une cellule cible et/ou des signaux pilotes, au cours du temps de mesure de système intermédiaire / fréquence intermédiaire disponible ou au cours d'un temps donné équivalent au temps de mesure de système intermédiaire / fréquence intermédiaire disponible moins le temps de commutation d'un récepteur.

8. Procédé selon la revendication 1, dans lequel ledit temps d'établissement de rapport est déterminé en fonction du temps de mesure de système intermédiaire / fréquence intermédiaire disponible, ou en fonction d'un temps donné équivalent au temps de mesure de système intermédiaire / fréquence intermédiaire disponible moins le temps de commutation d'un récepteur.

9. Procédé selon la revendication 1, dans lequel ledit temps d'établissement de rapport est déterminé en fonction du nombre de trames ou de sous-trames contenant des signaux de diffusion générale reçus d'une cellule cible et/ou des signaux pilotes, au cours du temps de mesure de système intermédiaire / fréquence intermédiaire disponible ou au cours d'un temps donné équivalent au temps de mesure de système intermédiaire / fréquence intermédiaire disponible moins le temps de commutation d'un récepteur.

10. Procédé selon la revendication 6, dans lequel l'équipement UE est un équipement UE de duplexage par répartition en fréquence, FDD UE, la nouvelle cellule est une cellule de fréquence intermédiaire de l'équipement UE de duplexage FDD, et le temps d'identification déterminé par l'équipement UE de duplexage FDD est calculé par la formule suivante:

$$T_{identify, \text{int} er} = Ceil\left\{\frac{T_{basic\_identify\_FDD, \text{int} er}}{T_{\text{int} er}}\right\} * T_{meas} * N_{freq, FDD}$$

où

$T_{identify}$, inter représente un temps d'identification pour l'équipement UE de duplexage FDD identifiant une cellule de fréquence intermédiaire;

$T_{basic\ idendify\ FDD}$, inter = 300 ms, est un temps maximum autorisé de manière à identifier une nouvelle cellule de fréquence intermédiaire pour l'équipement UE de duplexage FDD;

$N_{Freq,\ FDD}$ est le nombre de fréquences FDD indiquées dans une liste d'informations de cellules de fréquence intermédiaire dans des informations de commande de mesure de système délivrées par un réseau d'accès;

$$T_{meas} = [(N_{FDD} + N_{TDD} + N_{GSM}) * N_{TTI} * M\_REP * 10]$$

où $N_{TTI}$ est l'intervalle TTI en nombre de trames de 10 ms du canal FACH présentant le plus grand intervalle TTI sur le canal SCCPCH sélectionné par l'équipement UE de duplexage FDD, et les canaux FACH qui ne transportent que des canaux logiques de service MBMS sont exclus des calculs d'occasion de mesure;

M_REP est une durée de cycle d'occasion de mesure, et M_REP = $2^k$, où k est un coefficient de durée de cycle d'occasion de mesure de canal FACH;

$N_{FDD}$ est égale à 0 ou à 1; s'il existe une cellule de fréquence intermédiaire FDD dans une liste d'informations de cellules adjacentes, $N_{FDD}$ = 1; sinon, $N_{FDD}$ =0%

$N_{TDD}$ est égale à 0 ou à 1; s'il existe une cellule de fréquence intermédiaire TDD dans la liste d'informations de cellules adjacentes, $N_{TDD}$ = 1; sinon, $N_{TDD}$ = 0;

$N_{GSM}$ est égale à 0 ou à 1; s'il existe une cellule de fréquence intermédiaire GSM dans la liste d'informations de cellules adjacentes, $N_{GSM}$ = 1; sinon, $N_{GSM}$ = 0;

$T_{inter}$ est un temps de mesure de fréquence intermédiaire disponible déterminé par l'équipement UE de duplexage FDD avec les performances de démodulation requises garanties pour le service MBMS reçu; lorsque le temps de commutation d'un récepteur est considéré, $T_{inter}$ est égale au temps de mesure de fréquence intermédiaire disponible moins le temps de commutation du récepteur.

**11.** Procédé selon la revendication 8, dans lequel l'équipement UE est l'équipement UE de duplexage FDD, et la nouvelle cellule est une cellule de fréquence intermédiaire de l'équipement UE de duplexage FDD, et le temps d'établissement de rapport déterminé par l'équipement UE de duplexage FDD est calculé par la formule suivante:

$$T_{measurement, \text{int} er} = Max\left\{T_{Measurement\_Period, Inter}, 2 * T_{meas}, Ceil\left\{\frac{T_{basic\_measurment\_FDD, \text{int} er}}{T_{\text{int} er}}\right\} * T_{meas} * N_{Freq, FDD}\right\}$$

$T_{basic\text{-}measurement\_FDD, inter}$ = 50 ms;

$T_{Measurement\ Period, inter}$ = 480 ms ;

$N_{Freq,\ FDD}$ est le nombre de fréquences FDD indiquées dans une liste d'informations de cellules de fréquence intermédiaire dans des informations de commande de mesure de système délivrées par un réseau d'accès;

$$T_{meas} = [(N_{FDD} + N_{TDD} + N_{GSM}) * N_{TTI} * M\_REP * 10],$$

où

$N_{TTI}$ est l'intervalle TTI en nombre de trames de 10 ms du canal FACH présentant le plus grand intervalle TTI sur le canal SCCPCH sélectionné par l'équipement UE de duplexage FDD, et les canaux FACH qui ne transportent que des canaux logiques de service MBMS sont exclus des calculs d'occasion de mesure;

M_REP est une durée de cycle d'occasion de mesure, et M_REP = $2^k$, où k est un coefficient de durée de cycle d'occasion de mesure de canal FACH;

$N_{FDD}$ est égale à 0 ou à 1; s'il existe une cellule de fréquence intermédiaire FDD dans une liste d'informations de cellules adjacentes, $N_{FDD}$ = 1; sinon, $N_{FDD}$ = 0;

$N_{TDD}$ est égale à 0 ou à 1; s'il existe une cellule de fréquence intermédiaire TDD dans la liste d'informations de cellules adjacentes, $N_{TDD}$ = 1; sinon, $N_{TDD}$ 0;

$N_{GSM}$ est égale à 0 ou à 1; s'il existe une cellule de fréquence intermédiaire GSM dans la liste d'informations de cellules adjacentes, $N_{GSM}$ = 1; sinon, $N_{GSM}$ = 0;

$T_{inter}$ est un temps de mesure de fréquence intermédiaire disponible déterminé par l'équipement UE de duplexage FDD avec les performances de démodulation requises garanties pour le service MBMS reçu, ou un temps donné équivalent au temps de mesure de fréquence intermédiaire disponible moins le temps de commutation d'un récepteur.

**12.** Procédé selon la revendication 6, dans lequel l'équipement UE est l'équipement UE de duplexage FDD, la nouvelle cellule est une cellule TDD d'accès WCDMA inter-système, et le temps d'identification déterminé par l'équipement UE de duplexage FDD est déterminé par la formule suivante:

$$T_{\text{identify, TDD}} = Max\left\{5000, Ceil\left\{\frac{T_{basic\_identify\_FDD,\text{int}er}}{T_{\text{int}er}}\right\} * T_{meas} * N_{Freq,FDD}\right\},$$

où

$T_{basic\ identify\ TDD}$, inter est un temps maximum autorisé de manière à identifier une nouvelle cellule TDD d'accès WCDMA pour l'équipement UE de duplexage FDD;

$N_{Freq,\ TDD}$ est le nombre de fréquences TDD indiquées dans une liste d'informations des cellules de fréquence intermédiaire dans des informations de commande de mesure de système délivrées par un réseau d'accès;

$$T_{meas} = [(N_{FDD} + N_{TDD} + N_{GSM}) * N_{TTI} * M\_REP * 10],$$

où

$N_{TTI}$ est l'intervalle TTI (en nombre de trames de 10 ms) du canal FACH présentant le plus grand intervalle TTI sur le canal SCCPCH sélectionné par l'équipement UE de duplexage FDD, et les canaux FACH qui ne transportent que des canaux logiques de service MBMS sont exclus des calculs d'occasion de mesure;

M_REP est une durée de cycle d'occasion de mesure, et M_REP = $2^k$, où k est un coefficient de durée de cycle d'occasion de mesure de canal FACH;

$N_{FDD}$ est égale à 0 ou à 1; s'il existe une cellule de fréquence intermédiaire FDD dans une liste d'informations de cellules adjacentes, $N_{FDD}$ = 1; sinon, $N_{FDD}$ = 0;

$N_{TDD}$ est égale à 0 ou à 1; s'il existe une cellule de fréquence intermédiaire TDD dans la liste d'informations de cellules adjacentes, $N_{TDD}$ = 1; sinon, $N_{TDD}$ 0;

$N_{GSM}$ est égale à 0 ou à 1; s'il existe une cellule de fréquence intermédiaire GSM dans la liste d'informations de cellules adjacentes, $N_{GSM}$ = 1; sinon, $N_{GSM}$ = 0;

$T_{inter}$ est un temps de mesure de fréquence intermédiaire disponible déterminé par l'équipement UE de duplexage FDD avec les performances de démodulation requises garanties pour le service MBMS reçu, ou un temps donné équivalent au temps de mesure de fréquence intermédiaire disponible moins le temps de commutation d'un récepteur.

**13.** Procédé selon la revendication 8, dans lequel l'équipement UE est l'équipement UE de duplexage FDD, la nouvelle cellule est une cellule TDD d'accès WCDMA inter-système, et le temps d'établissement de rapport déterminé par l'équipement UE de duplexage FDD est calculé par la formule suivante:

où

$$T_{measurement,TDD} = Max\left\{T_{Measurement\_Period,TDD,\text{int}er}, 2 * T_{meas}, Ceil\left\{\frac{T_{basic\_measurment\_TDD,\text{int}er}}{T_{\text{int}er}}\right\} * T_{meas} * N_{Freq,TDD}\right\}$$

$T_{basic\_measurement\_TDD,\ inter}$ = 50 ms;
$T_{Measurement\ Period,\ TDD\ inter}$ = 480 ms;

$$T_{meas} = [(N_{FDD} + N_{TDD} + N_{GSM}) * N_{TTI} * M\_REP * 10],$$

où

$N_{TTI}$ est l'intervalle TTI (en nombre de trames de 10 ms) du canal FACH présentant le plus grand intervalle TTI sur le canal SCCPCH sélectionné par l'équipement UE de duplexage FDD, et les canaux FACH qui ne transportent que des canaux logiques de service MBMS sont exclus des calculs d'occasion de mesure;

M_REP est une durée de cycle d'occasion de mesure, et M_REP = $2^k$, où k est un coefficient de durée de cycle d'occasion de mesure de canal FACH;

$N_{FDD}$ est égale à 0 ou à 1; s'il existe une cellule de fréquence intermédiaire FDD dans une liste d'informations de cellules adjacentes, $N_{FDD}$ = 1; sinon, $N_{FDD}$ = 0;

$N_{TDD}$ est égale à 0 ou à 1; s'il existe une cellule de fréquence intermédiaire TDD dans la liste d'informations de cellules adjacentes, $N_{TDD}$ = 1; sinon, $N_{TDD}$ = 0;

$N_{GSM}$ est égale à 0 ou à 1; s'il existe une cellule de fréquence intermédiaire GSM dans la liste d'informations de cellules adjacentes, $N_{GSM}$ = 1; sinon, $N_{GSM}$ = 0;

$N_{Freq,\ TDD}$ est le nombre de fréquences TDD indiquées dans une liste d'informations de cellules de fréquence intermédiaire dans des informations de commande de mesure de système émises par un réseau d'accès radio universel terrestre UTRAN;

$T_{inter}$ est un temps de mesure de fréquence intermédiaire disponible déterminé par l'équipement UE de duplexage FDD avec les performances de démodulation requises garanties pour le service MBMS reçu, ou un temps donné équivalent au temps de mesure de fréquence intermédiaire disponible moins le temps de commutation d'un récepteur.

**14.** Procédé selon la revendication 6, dans lequel l'équipement UE est l'équipement UE de duplexage FDD, et la nouvelle cellule est une cellule de fréquence intra de l'équipement UE de duplexage FDD, et le temps d'identification déterminé par l'équipement UE de duplexage FDD est déterminé par la formule suivante:

$$T_{identify,\ \text{int}\ ra} = Max\left\{800, Ceil\left\{\frac{T_{basic\_identify\_FDD,\ \text{int}\ ra}}{T_{\text{int}\ ra}}\right\} * N_{TM} * M\_REP * 10\right\}$$

$T_{basic\ identify\ FDD,\ intra}$ = 800 ms

$N_{TTI}$ est l'intervalle TTI, en nombre de trames de 10 ms, du canal FACH présentant le plus grand intervalle TTI sur le canal SCCPCH sélectionné par l'équipement UE de duplexage FDD, et les canaux FACH qui ne transportent que des canaux logiques de service MBMS sont exclus des calculs d'occasion de mesure;

M_REP est une durée de cycle d'occasion de mesure, et M_REP = $2^k$, où k est un coefficient de durée de cycle d'occasion de mesure de canal FACH;

$T_{intra}$ est un temps de mesure de fréquence intra disponible déterminé par l'équipement UE de duplexage FDD avec les performances de démodulation requises garanties pour le service MBMS reçu, ou un temps donné équivalent au temps de mesure de fréquence intra disponible moins le temps de commutation d'un récepteur.

**15.** Procédé selon la revendication 1, dans lequel l'exigence de performances de mesures comporte en outre le nombre de cellules ayant fait l'objet d'un rapport, l'équipement UE est l'équipement UE de duplexage FDD, la nouvelle cellule est une cellule de fréquence intra de l'équipement UE de duplexage FDD, le temps d'établissement de rapport déterminé par l'équipement UE de duplexage FDD est de 200 ms, et le nombre de cellules ayant fait l'objet d'un rapport est calculé par la formule suivante:

$$Y_{measurement\ intra} = Floor\left\{ X_{basic\ measurement\ FDD} \cdot \frac{T_{Measurement\_Period\ Intra} - Ceil\left\{\frac{T_{Measurement\_Period\ Intra}}{N_{TTI} \cdot M\_REP \cdot 10\ ms}\right\} \cdot Tin}{T_{Measurement\_Period\ Intra}} \right\},$$

où

$X_{basic\ measurement\ FDD}$ = 0;

$T_{Measurement\ period\ Intra}$ est une période de mesure de fréquence intra;

$T_{in} = N_{TTI} * 10$, est un temps de mesure de système intermédiaire / fréquence intermédiaire disponible déterminé par l'équipement UE de duplexage FDD avec les performances de démodulation requises garanties pour le service MBMS reçu, ou un temps donné équivalent au temps de mesure de système intermédiaire / fréquence intermédiaire disponible moins le temps de commutation d'un récepteur.

**16.** Procédé selon la revendication 6, dans lequel l'équipement UE est un équipement UE de duplexage TDD de 3,84 Mc/s, la nouvelle cellule est une cellule de duplexage TDD de fréquence intermédiaire de l'équipement UE de duplexage TDD, et le temps d'identification déterminé par l'équipement UE est déterminé par la formule suivante:

$$T_{identify,\ inter} = Max\left\{ 5000, Ceil\left\{\frac{T_{basic\_identify\_TDD,\ inter}}{T_{inter}}\right\} * T_{meas} * N_{Freq,FDD} \right\},$$

où

$T_{basic\ identify\ TDD,\ inter}$ est un temps maximum autorisé de manière à identifier une cellule de fréquence intermédiaire pour l'équipement UE de duplexage TDD;

$N_{Freq,\ TDD}$ est le nombre de fréquences TDD indiquées dans une liste d'informations de cellules de fréquence intermédiaire dans des informations de commande de mesure de système délivrées par un réseau d'accès;

$$T_{meas} = [(N_{FDD} + N_{TDD} + N_{GSM}) * N_{TTI} * M\_REP * 10],$$

où

$N_{TTI}$ est l'intervalle TTI en nombre de trames de 10 ms du canal FACH présentant le plus grand intervalle TTI sur le canal SCCPCH sélectionné par l'équipement UE de duplexage FDD, et les canaux FACH qui ne transportent que des canaux logiques de service MBMS sont exclus des calculs d'occasion de mesure;

$M\_REP$ est une durée de cycle d'occasion de mesure, et $M\_REP = 2^k$, où k est un coefficient de durée de cycle d'occasion de mesure de canal FACH;

$N_{FDD}$ est égale à 0 ou à 1; s'il existe une cellule de fréquence intermédiaire FDD dans une liste d'informations de cellules adjacentes, $N_{FDD} = 1$; sinon, $N_{FDD} = 0$;

$N_{TDD}$ est égale à 0 ou à 1; s'il existe une cellule de fréquence intermédiaire TDD dans la liste d'informations de cellules adjacentes, $N_{TDD} = 1$; sinon, $N_{TDD}$ 0;

$N_{GSM}$ est égale à 0 ou à 1; s'il existe une cellule de fréquence intermédiaire GSM dans la liste d'informations de cellules adjacentes, $N_{GSM} = 1$; sinon, $N_{GSM}$ 0;

$T_{inter}$ est un temps de mesure de fréquence intermédiaire disponible déterminé par l'équipement UE de duplexage FDD avec les performances de démodulation requises garanties pour le service MBMS reçu, ou un temps donné équivalent au temps de mesure de fréquence intermédiaire disponible moins le temps de commutation d'un récepteur.

**17.** Procédé selon la revendication 7, dans lequel l'équipement UE est un équipement UE de duplexage TDD de 1,28 Mc/s, la nouvelle cellule est une cellule de fréquence intermédiaire de l'équipement UE de duplexage TDD, et le temps d'identification déterminé par l'équipement UE est déterminé par la formule suivante:

$$T_{identify,\text{int } er} = Max\left\{5000, N_{basic - identify\_TDD,\text{int } er} * \frac{T_{Measurment\_Period,Inter}}{N_{\text{int } er}} * N_{Freq}\right\},$$

où

$T_{basic\ identify\ TDD,inter}$ est un temps maximum autorisé de manière à identifier une cellule de fréquence intermédiaire pour l'équipement UE de duplexage TDD;

$T_{Measurement\ Period\ Inter}$ = 480 ms ;

$N_{Freq}$ est le nombre de fréquences TDD indiquées dans une liste d'informations de cellules de fréquence intermédiaire dans des informations de commande de mesure de système indiquées par un réseau UTRAN;

$N_{Inter}$ est le nombre de sous-trames où des signaux des canaux DwPCH et PCCPCH d'une cellule de duplexage TDD de fréquence intermédiaire cible sont localisés, et les signaux sont reçus dans le temps de mesure de fréquence intermédiaire disponible déterminé par l'équipement UE de duplexage TDD sur la base des performances de démodulation requises garanties pour le service MBMS reçu, ou il est le nombre de sous-trames où des signaux des canaux DwPCH et PCCPCH d'une cellule de duplexage TDD de fréquence intermédiaire cible sont localisés, et les signaux sont reçus au cours d'un temps donné égale au temps de mesure de fréquence intermédiaire disponible moins le temps de commutation d'un récepteur.

**18.** Procédé selon la revendication 8, dans lequel l'équipement UE est un équipement UE de duplexage TDD de 3,84 Mc/s, la cellule est une cellule de fréquence intermédiaire de l'équipement UE de duplexage TDD, et le temps d'établissement de rapport déterminé par l'équipement UE est calculé par la formule suivante:

$$T_{measurement,\text{int } er} = Max\left\{T_{Measurement\_Period,TDD,Inter}, 2 * T_{meas}, Ceil\left\{\frac{T_{basic\_measurement\_TDD,\text{int } er}}{T_{\text{int } er}}\right\} * T_{meas} * N_{Freq}\right\}$$

où

$T_{basic\ measurment\ TDD,\ inter}$ = 50 ms

$T_{Measurement\ Period\ TDD\ Inter}$ = 480 ms ;

$N_{Freq}$ est le nombre de fréquences TDD indiquées dans une liste d'informations de cellules de fréquence intermédiaire dans des informations de commande de mesure de système indiquées par un réseau UTRAN;

$$T_{meas} = [(N_{FDD} + N_{TDD} + N_{GSM}) * N_{TTI} * M\_REP * 10],$$

où

$N_{TTI}$ est l'intervalle TTI en nombre de trames de 10 ms du canal FACH présentant le plus grand intervalle TTI sur le canal SCCPCH sélectionné par l'équipement UE de duplexage FDD, et les canaux FACH qui ne transportent que des canaux logiques de service MBMS sont exclus des calculs d'occasion de mesure;

M_REP est une durée de cycle d'occasion de mesure, et $M\_REP = 2^k$, où k est un coefficient de durée de cycle d'occasion de mesure de canal FACH;

$N_{FDD}$ est égale à 0 ou à 1; s'il existe une cellule de fréquence intermédiaire FDD dans une liste d'informations de cellules adjacentes, $N_{FDD}$ = 1; sinon, $N_{FDD}$ = 0;

$N_{TDD}$ est égale à 0 ou à 1; s'il existe une cellule de fréquence intermédiaire TDD dans la liste d'informations de cellules adjacentes, $N_{TDD}$ = 1; sinon, $N_{TDD}$ = 0;

$N_{GSM}$ est égale à 0 ou à 1; s'il existe une cellule de fréquence intermédiaire GSM dans la liste d'informations de cellules adjacentes, $N_{GSM}$ = 1; sinon, $N_{GSM}$ = 0;

$T_{inter}$ est un temps de mesure de fréquence intermédiaire disponible déterminé par l'équipement UE de duplexage FDD avec les performances de démodulation requises garanties pour le service MBMS reçu, ou un temps donné équivalent au temps de mesure de fréquence intermédiaire disponible moins le temps de commutation d'un récepteur.

**19.** Procédé selon la revendication 9, dans lequel l'équipement UE est un équipement UE de duplexage TDD de 1,28 Mc/s, la cellule est une cellule de fréquence intermédiaire de l'équipement UE de duplexage TDD, et le temps d'établissement de rapport déterminé par l'équipement UE de duplexage TDD est calculé par la formule suivante:

$$T_{measurement,\,int\,er} = Max\left\{ T_{Measurement\_Period,Inter},\, N_{basic\_measurement\,TDD\,inter}\frac{T_{basic\_period,int\,er}}{N_{int\,er}} * N_{Freq} \right\}ms\,,$$

où

$T_{Measurement\ Period\ Inter}$ = 480 ms ;
$T_{basic\ measurement\ FDD,\ inter}$ = 50 ms ;
$N_{Freq}$ est le nombre de fréquences TDD indiquées dans une liste d'informations de cellules de fréquence intermédiaire dans des informations de commande de mesure de système indiquées par un réseau UTRAN;
$N_{Inter}$ est le nombre de sous-trames où des signaux des canaux DwPCH et PCCPCH d'une cellule de duplexage TDD de fréquence intermédiaire cible sont localisés, et les signaux sont reçus au cours d'un temps de mesure de fréquence intermédiaire disponible déterminé par l'équipement UE de duplexage TDD avec les performances de démodulation requises garanties pour le service MBMS reçu, ou il est le nombre des sous-trames où des signaux des canaux DwPCH et PCCPCH d'une cellule de duplexage TDD de fréquence intermédiaire cible sont localisés, et les signaux sont reçus au cours d'un temps donné égale au temps de mesure de fréquence intermédiaire disponible moins le temps de commutation d'un récepteur.

**20.** Procédé selon la revendication 6, dans lequel l'équipement UE est un équipement UE de duplexage TDD de 3,84 Mc/s, la nouvelle cellule est une cellule de duplexage TDD d'accès WCDMA, et le temps d'identification déterminé par l'équipement UE de duplexage TDD est déterminé par la formule suivante:

$$T_{identify,FDD\,int\,er} = Max\left\{ 5000, Ceil\left\{ \frac{T_{basic\_identify\_FDD,int\,er}}{T_{int\,er}} \right\} * T_{meas} * N_{Freq,FDD} \right\}\,,$$

où

$T_{basic\ identify\ FDD,\ inter}$ = 800 ms, est un temps maximum autorisé de manière à identifier une nouvelle cellule TDD d'accès WCDMA pour l'équipement UE de duplexage TDD;

$$T_{meas} = [(N_{FDD} + N_{TDD} + N_{GSM}) * N_{TTI} * M\_REP * 10],$$

où
$N_{TTI}$ est l'intervalle TTI en nombre de trames de 10 ms du canal FACH présentant le plus grand intervalle TTI sur le canal SCCPCH sélectionné par l'équipement UE de duplexage FDD, et les canaux FACH qui ne transportent que des canaux logiques de service MBMS sont exclus des calculs d'occasion de mesure;
M_REP est une durée de cycle d'occasion de mesure, et $M\_REP = 2^k$, où k est un coefficient de durée de cycle d'occasion de mesure de canal FACH;
$N_{FDD}$ est égale à 0 ou à 1; s'il existe une cellule de fréquence intermédiaire FDD dans une liste d'informations de cellules adjacentes, $N_{FDD}$ = 1; sinon, $N_{FDD}$ = 0;
$N_{TDD}$ est égale à 0 ou à 1; s'il existe une cellule de fréquence intermédiaire TDD dans la liste d'informations de cellules adjacentes, $N_{TDD}$ = 1; sinon, $N_{TDD}$ =0;
$N_{GSM}$ est égale à 0 ou à 1; s'il existe une cellule de fréquence intermédiaire GSM dans la liste d'informations de cellules adjacentes, GSM =1; sinon, $N_{GSM}$ 0;
$N_{Freq,\ FDD}$ est le nombre de fréquences FDD indiquées dans une liste d'informations de cellules de fréquence intermédiaire dans des informations de commande de mesure de système indiquées par un réseau UTRAN;
$T_{inter}$ est un temps de mesure de fréquence intermédiaire disponible déterminé par l'équipement UE de duplexage TDD avec les performances de démodulation requises garanties pour le service MBMS reçu, ou un temps donné équivalent au temps de mesure de fréquence intermédiaire disponible moins le temps de commutation d'un récepteur.

**21.** Procédé selon la revendication 6, dans lequel l'équipement UE est un équipement UE de duplexage TDD de 1,28 Mc/s, la nouvelle cellule est une cellule de duplexage FDD d'accès WCDMA, et le temps d'identification déterminé par l'équipement UE est déterminé par la formule suivante:

$$T_{identify,FDD\_inter} = Max\left\{5000, T_{basic\_identify\_FDD,inter} * \frac{T_{Measurment\_Period\_FDD,Inter}}{T_{inter}} * N_{Freq}\right\}ms \text{ ,}$$

où

$T_{basic\ identify\ FDD,\ inter}$ = 800 ms, est un temps maximum autorisé de manière à identifier une nouvelle cellule FDD d'accès WCDMA pour l'équipement UE de duplexage TDD;
$T_{Measurement\ Period\ FDD\ inter}$ = 480 ms ;
$N_{Freq}$ est le nombre de fréquences FDD indiquées dans une liste d'informations de cellules de fréquence intermédiaire dans des informations de commande de mesure de système indiquées par un réseau UTRAN;
$T_{Inter}$ est un temps de mesure de fréquence intermédiaire disponible déterminé par l'équipement UE de duplexage TDD avec les performances de démodulation requises garanties

pour le service MBMS reçu, ou un temps donné équivalent au temps de mesure de fréquence intermédiaire disponible moins le temps de commutation d'un récepteur.

**22.** Procédé selon la revendication 8, dans lequel l'équipement UE est un équipement UE de duplexage TDD de 3,84 Mc/s, la nouvelle cellule est une cellule TDD d'accès WCDMA inter-système, et le temps d'établissement de rapport déterminé par l'équipement UE de duplexage TDD est calculé par la formule suivante:

$$T_{measurement\_FDD\_inter} = Max\left\{T_{Measurement\_Period,FDD,Inter}, 2 * T_{meas}, Ceil\left\{\frac{T_{basic\_measurement\_FDD,inter}}{T_{inter}}\right\} * T_{meas} * N_{Freq,FDD}\right\}$$

où

$T_{basic\ measurement\ FDD,\ inter}$ = 50 ms;
$T_{Measurement\ Period\ FDD\ Inter}$ = 480 ms ;
$N_{Freq,\ TDD}$ est le nombre de fréquences TDD indiquées dans une liste d'informations de cellules de fréquence intermédiaire dans des informations de commande de mesure de système délivrées par un réseau d'accès;

$$T_{meas} = [(N_{FDD} + N_{TDD} + N_{GSM}) * N_{TTI} * M\_REP * 10]$$

$N_{TTI}$ est l'intervalle TTI en nombre de trames de 10 ms du canal FACH présentant le plus grand intervalle TTI sur le canal SCCPCH sélectionné par l'équipement UE, et les canaux FACH qui ne transportent que des canaux logiques de service MBMS sont exclus des calculs d'occasion de mesure;
M_REP est une durée de cycle d'occasion de mesure, et M_REP = $2^k$, où k est un coefficient de durée de cycle d'occasion de mesure de canal FACH;
$N_{FDD}$ est égale à 0 ou à 1; s'il existe une cellule de fréquence intermédiaire FDD dans une liste d'informations de cellules adjacentes, $N_{FDD}$ = 1; sinon, $N_{FDD}$ = 0;
$N_{TDD}$ est égale à 0 ou à 1; s'il existe une cellule de fréquence intermédiaire TDD dans la liste d'informations de cellules adjacentes, $N_{TDD}$ = 1; sinon, $N_{TDD}$ =0;
$N_{GSM}$ est égale à 0 ou à 1; s'il existe une cellule de fréquence intermédiaire GSM dans la liste d'informations de cellules adjacentes, $N_{GSM}$ = 1; sinon, $N_{GSM}$ = 0;
$T_{Inter}$ est un temps de mesure de fréquence intermédiaire disponible déterminé par l'équipement UE de duplexage TDD avec les performances de démodulation requises garanties pour le service MBMS reçu, ou un temps donné équivalent au temps de mesure de fréquence intermédiaire disponible moins le temps de commutation d'un récepteur.

**23.** Procédé selon la revendication 8, dans lequel l'équipement UE est un équipement UE de duplexage TDD de 1,28 Mc/s, la nouvelle cellule est une cellule TDD d'accès WCDMA inter-système, et le temps d'établissement de rapport déterminé par l'équipement UE de duplexage TDD est calculé par la formule suivante:

$$T_{measurement, FDD\,inter} = Max\left\{T_{Measurement\_Period\_FDD,\,inter}, T_{basic\_Measurement\_FDD,\,inter} * \frac{T_{Measurment\_Period\_FDD,\,Inter}}{T_{inter}} * N_{Freq}\right\}ms$$

où

$T_{Measurement\ Period\ FDD\ Inter}$ = 480 ms ;

$T_{basic\ measurement\ FDD,\ inter}$ = 50 ms ;

$N_{Freq}$ est le nombre de fréquences TDD indiquées dans une liste d'informations de cellules de fréquence intermédiaire dans des informations de commande de mesure de système indiquées par un réseau UTRAN;

$T_{Inter}$ est un temps de mesure de fréquence intermédiaire disponible déterminé par l'équipement UE de duplexage TDD avec les performances de démodulation requises garanties pour le service MBMS reçu, ou un temps donné équivalent au temps de mesure de fréquence intermédiaire disponible moins le temps de commutation d'un récepteur.

24. Procédé selon la revendication 9, dans lequel l'équipement UE est l'équipement UE de duplexage TDD, et la nouvelle cellule est une cellule de fréquence intra de l'équipement UE de duplexage TDD, et le temps d'identification déterminé par l'équipement UE de duplexage TDD est déterminé par la formule suivante:

$$T_{identify\ intra} = T_{basic\_identify,TDD,\ intra} * \frac{N_{period,intra}}{N_{intra}},$$

où

$T_{basic\_identify,\ TDD,\ intra}$ = 800 ms ;

$N_{period,\ intra}$ = 40 ms ;

$N_{intra}$ est le nombre de sous-trames où des signaux des canaux DwPCH et PCCPCH d'une cellule de duplexage TDD de fréquence intermédiaire cible sont localisés, et les signaux sont reçus dans un temps de mesure de fréquence intra disponible déterminé avec les performances de démodulation requises garanties pour le service MBMS reçu.

25. Procédé selon la revendication 1, dans lequel l'exigence de performances de mesures comporte en outre le nombre de cellules ayant fait l'objet d'un rapport, l'équipement UE est l'équipement UE de duplexage TDD, la nouvelle cellule est une cellule de fréquence intra de l'équipement UE de duplexage TDD, le temps d'établissement de rapport déterminé par l'équipement UE est de 200 ms, et le nombre de cellules ayant fait l'objet d'un rapport est calculé par la formule suivante:

$$Y_{measuremet,\ intra} = Floor\left\{X_{basic\ measurement\_TDD} * \frac{N_{intra}}{N_{period\ intra}}\right\}$$

$X_{basic\ measurement\ TDD}$ = 8;

$N_{period,\ intra}$ = 40 ms ;

$N_{intra}$ est le nombre de sous-trames où des signaux des canaux DwPCH et PCCPCH d'une cellule de duplexage TDD de fréquence intermédiaire cible sont localisés, et les signaux sont reçus dans un temps de mesure de fréquence intra disponible déterminé avec les performances de démodulation requises garanties pour le service MBMS reçu.

26. Procédé selon la revendication 6, 8 ou 15, dans lequel le temps de mesure de fréquence intermédiaire n'est pas supérieur à 25 % de l'intervalle TTI d'un canal de service point à multipoint de multidiffusion / diffusion multimédia (MTCH).

27. Procédé selon l'une quelconque des revendications 6 à 23, ou 26, dans lequel le temps de commutation du récepteur est déterminé par la capacité matérielle du récepteur et une valeur dominante du récepteur est 1 ms.

28. Procédé selon la revendication 1, dans lequel le service MBMS comporte au moins l'un parmi les éléments suivants:

des informations de service point à multipoint de multidiffusion / diffusion multimédia et des informations de commande point à multipoint de multidiffusion / diffusion multimédia.

29. Dispositif destiné à recevoir un service de multidiffusion / diffusion multimédia MBMS par un équipement UE, l'équipement UE étant apte à utiliser un temps de mesure de système intermédiaire / fréquence intermédiaire pour mesurer une cellule de système intermédiaire / fréquence intermédiaire en continu, **caractérisé en ce que** le dispositif comporte:

un moyen de sélection, apte à sélectionner une partie du temps de mesure de système intermédiaire / fréquence intermédiaire en tant qu'un temps de mesure de système intermédiaire / fréquence intermédiaire disponible afin de mettre en oeuvre une mesure de système intermédiaire / fréquence intermédiaire d'une cellule de système intermédiaire / fréquence intermédiaire pour satisfaire des performances de démodulation requises d'un service MBMS dans l'autre partie;
un moyen de réception, apte à recevoir un service MBMS dans l'autre partie du temps de mesure de système intermédiaire / fréquence intermédiaire; et
un moyen de détermination, apte à déterminer un temps d'identification de la cellule de système intermédiaire / fréquence intermédiaire et un temps d'établissement de rapport du résultat de la mesure sur la base du temps de mesure de système intermédiaire / fréquence intermédiaire disponible pour satisfaire à une exigence de performances de mesures pour la cellule de système intermédiaire / fréquence intermédiaire.

30. Dispositif selon la revendication 29, dans lequel le temps de mesure de système intermédiaire / fréquence intermédiaire disponible est une partie de la durée de cycle d'occasion de mesure de trames $N_{TTI}$ laquelle correspond à une partie de la durée d'intervalle de synchronisation de transmission, TTI, de service MBMS, ladite durée $N_{TTI}$ est l'intervalle TTI, en nombre de trames de 10 ms, du canal FACH présentant le plus grand intervalle TTI sur un canal physique de commande commun secondaire sélectionné, SCCPCH, et les canaux d'accès vers l'avant, FACH, qui ne transportent que des canaux logiques de service MBMS sont exclus des calculs d'occasion de mesure.

31. Dispositif selon la revendication 30, dans lequel la partie de la durée d'intervalle TTI de service MBMS est égale à 25 % de la durée d'intervalle TTI de service MBMS au maximum.

The UE reads inter frequency cell information indicated in system measurement control information issued by a UTRAN and finds out an unidentified inter-frequency cell ⟶ 10

The UE detects the unidentified inter-frequency cell ⟶ 11

The UE performs inter frequency measurement in a frame with an SFN meeting the formula SFN=(C_RNTI mod M_REP + n*M_REP)*N to identify the unidentified inter-frequency cell detected ⟶ 12

The UE successfully identifies the unidentified inter-frequency cell detected within the identifying time calculated by formula

$$T_{identify,\ inter} = Ceil\left\{\frac{T_{basic\_identify\_FDD,inter}}{T_{Inter}}\right\} \cdot T_{meas} \cdot N_{Freq,FDD} \quad ms$$

⟶ 13

The UE marks the aforesaid newly identified inter-frequency cell as identified inter frequency cell in a self-stored cell information list ⟶ 14

## Fig. 1

The UE receives system measurement control information or system broadcast information issued by a UTRAN and triggers the CPICH measurement of an inter-frequency cell ⟶ 20

The UE performs the CPICH measurement of the inter frequency cell in a frame with an SFN meeting formula SFN=(C_RNTI mod M_REP + n*M_REP)*N ⟶ 21

The physical layer of the UE reports a CPICH measuring result to the higher layer within a measuring period calculated by Formula 8 ⟶ 22

The higher layer of the UE uses the CPICH measuring result reported by the physical layer in its internal algorithm or reports the measuring result to an RNC ⟶ 23

## Fig. 2

The UE reads inter frequency cell information indicated in system measurement control information issued by a UTRAN and finds out an unidentified inter system WCDMA TDD cell ⟶ 30

↓

The UE detects the unidentified inter system WCDMA TDD cell ⟶ 31

↓

The UE performs inter system measurement in a frame with an SFN meeting formula SFN=(C_RNTI mod M_REP + n*M_REP)*N to identify the unidentified inter system WCDMA TDD celldetected ⟶ 32

↓

The UE successfully identifies the unidentified inter frequency WCDMA TDD cell detected within the identifying time calculated by Formula 9 ⟶ 33

↓

The UE marks the aforesaid newly identified inter system WCDMA TDD cell as identified inter system WCDMA TDD cell in a self-stored cell information list ⟶ 34

## Fig. 3

The UE receives system measurement control information or system broadcast information issued by a UTRAN and triggers the PCCPCH RSCP measuement of an inter system WCDMA TDD cell ⟶ 40

↓

The UE performs the PCCPCH RSCP measurement of the inter system WCDMA TDD cell in a frame with an SFN meeting formula SFN=(C_RNTI mod M_REP + n*M_REP)*N ⟶ 41

↓

The physical layer of the UE reports a PCCPCH RSCP measuring result to the higher layer within the measuring period calculated by Formula 8 ⟶ 42

↓

The higher layer of the UE uses the PCCPCH RSCP measuring result reported by the physical layer in its internal algorithm or reports the PCCPCH RSCP measuring result to the RNC ⟶ 43

## Fig. 4

The UE reads inter frequency cell information indicated in system measurement control information issued by a UTRAN and finds an unidentified inter system GSM cell or needs to measure an identified inter system GSM cell — 50

The UE detects the unidentified inter system GSM cell or measures the identified inter frequency GSM cell — 51

The UE measures the inter system GSM cell within an available inter frequency measuring time with the demodulation performance requirement ensured for the received MBMS in a frame with an SFN meeting formula $SFN=(C\_RNTI \bmod M\_REP + n \times M\_REP)*N$ to identify the unidentified inter system GSM cell detected or measures the identified inter frequency GSM cell — 52

The UE marks the aforesaid newly identified inter system GSM cell as identified inter system GSM cell in a self-stored cell information list or reports the measuring result of the identified inter system GSM cell — 53

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1478198 A1